(19) Europäisches Patentamt
European Patent Office
Office européen des brevets

(11) Veröffentlichungsnummer : **0 501 922 A2**

(12) **EUROPÄISCHE PATENTANMELDUNG**

(21) Anmeldenummer : **92810129.4**

(22) Anmeldetag : **21.02.92**

(51) Int. Cl.[5] : **C08L 79/08,** // (C08L79/08, 71:12, 63:02)

(30) Priorität : **01.03.91 CH 623/91**
**08.01.92 CH 28/92**

(43) Veröffentlichungstag der Anmeldung :
**02.09.92 Patentblatt 92/36**

(84) Benannte Vertragsstaaten :
**AT BE CH DE FR GB IT LI NL**

(71) Anmelder : **CIBA-GEIGY AG**
**Klybeckstrasse 141**
**CH-4002 Basel (CH)**

(72) Erfinder : **Pfaendner, Rudolf, Dr.**
**Sackgasse 3**
**W-6149 Rimbach/Odenwald 1 (DE)**
Erfinder : **Kainmüller, Thomas, Dr.**
**Am Kümmelberg 1**
**W-6145 Lindenfels 1 (DE)**
Erfinder : **Scharf, Wolfgang, Dr.**
**Röttler Ring 11 c**
**W-7889 Grenzach-Wyhlen (DE)**
Erfinder : **Haug, Theobald, Dr.**
**Untere Flühackerstrasse 12**
**CH-4402 Frenkendorf (CH)**
Erfinder : **Diethelm, Hermann, Dr.**
**Grottenweg**
**CH-1735 Giffers (CH)**

(54) **Gemische auf Basis von Polyamid-Polyimid-Blockcopolymeren.**

(57) Gemische enthaltend, bezogen auf 100 Gewichtsteile des Gemisches,
(a) 50 bis 98 Gew.-Teile eines Polyamid-Polyimid(PA-PI)-Blockcopolymeren,
(b) 1 bis 49 Gew.-Teile eines Polyarylenethers mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 100 Mol-% eines wiederkehrenden Strukturelementes der Formel Ia

$$\left[ O - Ar_1 - O - Ar_2 \right] \quad (Ia)$$

und 0 bis 95 Mol-% eines wiederkehrenden Strukturelementes der Formel Ib

$$\left[ O - Ar_3 - O - Ar_2 \right] \quad (Ib)$$

enthält, worin $Ar_1$ einen unsubstituierten oder durch ein oder mehrere $C_1$-$C_4$-Alkyle, $C_1$-$C_4$-Alkoxy oder Halogenatome substituierten carbocyclisch-organischen Rest, $Ar_2$ einen unsubstituierten oder durch ein oder mehrere $C_1$-$C_4$-Alkyle oder $C_1$-$C_4$-Alkoxy substituierten, ein oder mehrere -CO-, $-SO_2$- oder -SO- als Brückenglieder enthaltenden carbocyclisch-aromatischen Rest, Cyanphenylen, Pyridin- oder Pyrazin-Rest und $Ar_3$ einen von $Ar_1$ verschiedenen unsubstituierten oder durch ein oder mehrere $C_1$-$C_4$-Alkyle, $C_1$-$C_4$-Alkoxy oder Halogenatome substituierten carbocyclisch-aromatischen Rest bedeuten, und
(c) 1 bis 40 Gew. -Teile eines Epoxidharzes mit mindestens zwei Glycidylgruppen im Molekül und
(d) 0 bis 10 Gew.-Teile eines weiteren Polymeren aus der Gruppe der Polyamide, Polyimide, Polyetherimide, Polyesterimide, Polyhydantoin oder Polyparabansäuren, eignen sich zur Herstellung von lösungsmittelbeständigen Beschichtungen und Verklebungen, insbesondere zur Herstellung von flexiblen Laminaten.

EP 0 501 922 A2

Die vorliegende Erfindung betrifft Gemische enthaltend ein Polyamid-Polyimid(PA-PI)-Blockcopolymer, einen Polyarylenether und ein Epoxidharz, die aus diesen Gemischen hergestellten Laminate, Beschichtungen oder Verklebungen, insbesondere verklebten Metallfolien.

PA-PI-Blockcopolymere sind Werkstoffe mit sehr guten mechanischen und thermischen Eigenschaften, die unter anderem zur Beschichtung von Metallfolien verwendet werden können, wobei Laminate erhalten werden. Flexible Laminate müssen als wesentliche Eigenschaften eine hohe Haftung zwischen Metall und Polymerschicht, eine gute Chemikalienbeständigkeit, gute thermische und elektrische Eigenschaften und vor allem eine hohe Flexibilität aufweisen, das heisst, diese Materialien müssen sehr oft gefaltet werden können, bevor es zu einem Bruch des Laminates kommt. Derartige flexible Laminate sind beispielsweise im EP-Patent 48219 beschrieben. Die dort verarbeiteten Polymeren werden als Polyamid-Polyamidsäure-Lösung aufgebracht und nach der Beschichtung durch Wasserabspaltung thermisch in die unlösliche Polyamid-Polyimidform übergeführt. Dieser Reaktionsschritt kann jedoch zu unerwünschten Begleiterscheinungen, wie Blasenbildung und Molekulargewichtsabbau führen. Darüber hinaus ist die eingesetzte Polyamid-Polyamidsäure-Lösung nicht lagerstabil.

Es sind auch bereits in polaren aprotischen Lösungsmitteln lösliche PA-PI-Blockcopolymere, beispielsweise aus der EP-A-324 315, bekannt, die die beschriebenen Nachteile der Verarbeitung der Polyamid-Polyamidsäure-Lösung nicht aufweisen. Teilweise genügen diese bekannten, in polaren aprotischen Lösungsmitteln lösliche PA-PI-Blockcopolymeren jedoch nicht allen an sie gestellten Anforderungen, beispielsweise ist die Chemikalienbeständigkeit dieser löslichen Blockcopolymeren nach der Applikation nicht ausreichend.

Es wurde nun gefunden, dass PA-PI-Blockcopolymere im Gemisch mit Polyarylenethern und Epoxidharzen sich einfacher zu Laminaten verarbeiten lassen und flexible Laminate erhalten werden, die sich durch eine erhöhte Flexibilität und gute Chemikalienbeständigkeit auszeichnen.

Gegenstand vorliegender Erfindung sind somit Gemische enthaltend, bezogen auf 100 Gewichtsteile des Gemisches,

(a) 50 bis 98 Gew.-Teile eines Polyamid-Polyimid(PA-PI)-Blockcopolymeren,

(b) 1 bis 49 Gew.-Teile eines Polyarylenethers mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 100 Mol-% eines wiederkehrenden Strukturelementes der Formel Ia

$$\left[ O - Ar_1 - O - Ar_2 \right] \qquad (Ia)$$

und 0 bis 95 Mol-% eines wiederkehrenden Strukturelementes der Formel Ib

$$\left[ O - Ar_3 - O - Ar_2 \right] \qquad (Ib)$$

enthält, worin $Ar_1$ einen unsubstituierten oder durch ein oder mehrere $C_1$-$C_4$-Alkyle, $C_1$-$C_4$-Alkoxy oder Halogenatome substituierten carbocyclisch-organischen Rest, $Ar_2$ einen unsubstituierten oder durch ein oder mehrere $C_1$-$C_4$-Alkyle oder $C_1$-$C_4$-Alkoxy substituierten, ein oder mehrere -CO-, $-SO_2-$ oder -SO- als Brückenglieder enthaltenden carbocyclisch-aromatischen Rest, Cyanphenylen, Pyridin- oder Pyrazin-Rest und $Ar_3$ einen von $Ar_1$ verschiedenen unsubstituierten oder durch ein oder mehrere $C_1$-$C_4$-Alkyle, $C_1$-$C_4$-Alkoxy oder Halogenatome substituierten carbocyclisch-aromatischen Rest bedeuten,

(c) 1 bis 40 Gew.-Teile eines Epoxidharzes mit mindestens zwei Glycidylgruppen im Molekül und

(d) 0 bis 10 Gew.-Teile eines weiteren Polymeren aus der Gruppe der Polyamide, Polyimide, Polyetherimide, Polyesterimide, Polyhydantoine oder Polyparabansäuren.

Gegebenenfalls kann auch ein Gemisch aus zwei oder mehreren PA-PI-Blockcopolymeren und/oder aus zwei oder mehreren Polyarylenethern und/oder aus zwei oder mehreren Epoxidharzen Verwendung finden.

Vorzugsweise betrifft die vorliegende Erfindung Gemische enthaltend, bezogen auf 100 Gewichtsteile des Gemisches,

(a) 50 bis 98 Gew.-Teile eines Polyamid-Polyimid(PA-PI)-Blockcopolymeren,

(b) 1 bis 49 Gew.-Teile eines Polyarylenethers mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 100 Mol-% eines wiederkehrenden Strukturelementes der Formel Ia

$$\left[ O - Ar_1 - O - Ar_2 \right] \qquad (Ia)$$

und 0 bis 95 Mol-% eines wiederkehrenden Strukturelementes der Formel Ib

$$\left[ O - Ar_3 - O - Ar_2 \right] \qquad (Ib)$$

enthält, worin $Ar_1$ einen unsubstituierten oder durch ein oder mehrere $C_1$-$C_4$-Alkyle, $C_1$-$C_4$-Alkoxy oder Halogenatome substituierten carbocyclisch-organischen Rest, $Ar_2$ einen unsubstituierten oder durch ein oder mehrere $C_1$-$C_4$-Alkyle oder $C_1$-$C_4$-Alkoxy substituierten, ein oder mehrere -CO-, $-SO_2-$ oder -SO- als Brückenglieder enthaltenden carbocyclisch-aromatischen Rest, Cyanphenylen, Pyridin- oder Pyrazin-Rest

und $Ar_3$ einen von $Ar_1$ verschiedenen unsubstituierten oder durch ein oder mehrere $C_1$-$C_4$-Alkyle, $C_1$-$C_4$-Alkoxy oder Halogenatome substituierten carbocyclisch-aromatischen Rest bedeuten,

(c) 1 bis 40 Gew.-Teile eines Epoxidharzes mit mindestens zwei Glycidylgruppen im Molekül.

Gegebenenfalls kann auch ein Gemisch aus zwei oder mehreren PA-PI-Blockcopolymeren und/oder aus zwei oder mehreren Polyarylenethern und/oder aus zwei oder mehreren Epoxidharzen Verwendung finden.

In den erfindungsgemässen Gemischen liegen vorzugsweise folgende Anteile der Mischungskomponenten vor.

60 bis 95 Gew.-Teile eines PA-PI-Blockcopolymeres,
2,5 bis 30 Gew.-Teile eines Polyarylenethers und
2,5 bis 30 Gew.-Teile eines Epoxidharzes.

Insbesondere liegen in den erfindungsgemässen Gemischen

70 bis 90 Gew.-Teile eines PA-PI-Blockcopolymeres,
5 bis 20 Gew.-Teile eines Polyarylenethers und
5 bis 20 Gew.-Teile eines Epoxidharzes vor.

Unter PA-PI-Blockcopolymeren, die in den erfindungsgemässen Gemischen enthalten sind, sind Verbindungen zu verstehen, die aus Polyamid- und Polyimidblöcken, aus Polyamidimid- und Polyimidblöcken, aus Polyamid- und Polymidimid-Blöcken oder aus Polyamid-, Polyamidimid- und Polyimidblöcken aufgebaut sind. Solche Verbindungen und Verfahren zu deren Herstellung sind bekannt, beispielsweise aus DE-A-2 342 464, DE-A-2 342 454, DE-A-2 366 273, EP-A-0 048 219 oder EP-A-0 048 221. Die dort offenbarten Blockcopolymeren enthalten wiederkehrende Strukturelemente der Formel

$$-\!\!\!-\!\!\!\left[ PA - PI \right]_r\!\!-\!\!\!- ,$$

worin r eine ganze Zahl von 1 bis 500, PA einen Polyamidblock mit einem mittleren Molekulargewicht von 350 bis 30'000 und PI einen Polyimidblock mit einem mittleren Molekulargewicht von 750 bis 2'000 darstellen, und weisen im allgemeinen eine inhärente Viskosität von 0,1 bis 2,5 dl/g, insbesondere 0,4 bis 1,5 dl/g auf, gemessen an einer 0,5%-igen Lösung in N-Methyl-2-pyrrolidon bei 25°C. Die in der oben angegebenen Literatur beschriebenen PA-PI-Blockcopolymeren werden durch Cyclisierung (Imidisierung) der entsprechenden noch löslichen Polyamid-Polyamidsäure-Blockcopolymeren erhalten. Vorzugsweise enthalten die erfindungsgemässen Gemische als PA-PI-Blockcopolymere solche, die vor der Applikation noch löslich sind und nach der Applikation in kurzer Zeit bei verhältnismässig niedrigen Reaktionstemperaturen eine lösungsmittelstabile Beschichtung liefern, wobei gleichzeitig die guten mechanischen Eigenschaften des Polymeren weitgehend erhalten bleiben.

Unter dem Begriff "lösliches PA-PI-Blockcopolymeres" ist im allgemeinen ein in polaren aprotischen Lösungsmitteln lösliches Copolymer zu verstehen, aus dem sich Lösungen enthaltend mindestens 5 Gew.%, insbesondere mindestens 10 Gew.%, an PA-PI-Blockcopolymer, bezogen auf die Lösung, herstellen lassen.

Dafür geeignete aprotische Lösungsmittel sind beispielsweise N,N-Dimethylacetamid, N,N-Diethylacetamid, N,N-Dimethylformamid, N,N-Dimethylmethoxyacetamid, N-Methyl-2-pyrrolidon (NMP), N-Acetyl-2-pyrrolidon, N-Methyl-ε-caprolactam, N,N,N',N'-Tetramethylharnstoff, Dimethylsulfoxid und y-Butyrolacton.

In einem polaren aprotischen Lösungsmittel lösliche PA-PI-Blockcopolymere sind bekannt, beispielsweise aus der EP-A-324 315. Bevorzugt für die erfindungsgemässen Gemische sind Blockcopolymere des Typs A mit einem mittleren Molekulargewicht $\overline{M}_n$ von 1'000 bis 50'000 und wiederkehrenden Einheiten der Formel II

$$\left[ PA\text{-}PI \right] \quad (II),$$

worin PA für einen Polyamidblock mit einem mittleren Molekulargewicht $\overline{M}_n$ von 300-20'000 steht, enthaltend mindestens eine (wiederkehrende) Einheit der Formel III

$$-\!\!\!\left[ \overset{O}{\overset{\|}{C}}\text{-}R_1\text{-}\overset{O}{\overset{\|}{C}}\text{-}NH\text{-}R_2\text{-}NH \right]\!\!\!- \qquad (III),$$

worin $R_1$ ein Rest der Formeln $-C_nH_{2n}-$,

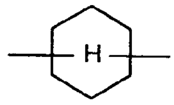, 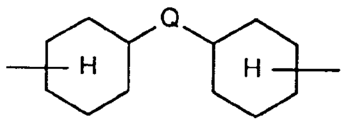,

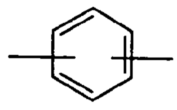, 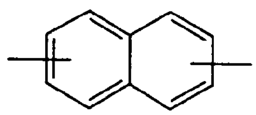 oder 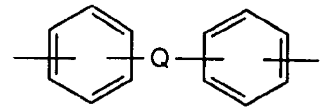

ist, und $R_2$ einen Rest der Formeln $-C_nH_{2n}-$,

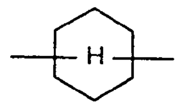, 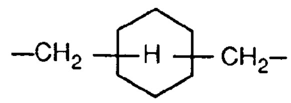,

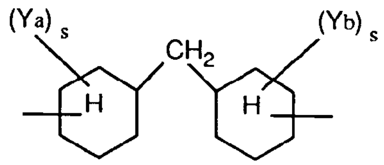, 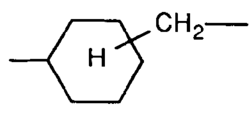, 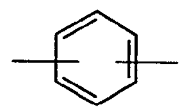,

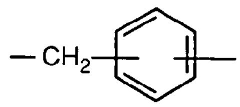, 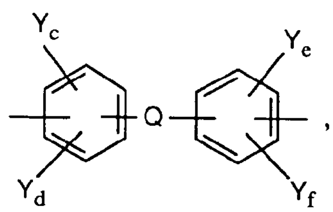,

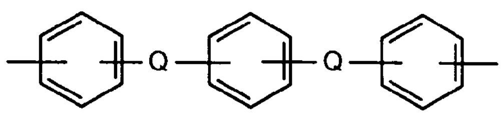

oder

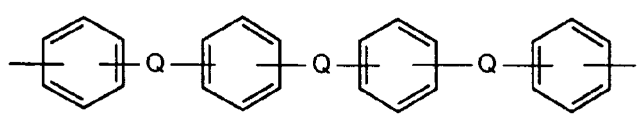

bedeutet, worin Q die direkte Bindung, $-CH_2-$, $-CH_2CH_2-$, $-CH(CH_3)-$, $-C(CH_3)_2-$, $-C(CF_3)-$, -O-, -S-, $-SO_2-$, oder -CO-,

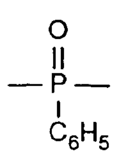

ist, und n 2-12 ist, $Y_a$ und $Y_b$ unabhängig voneinander je ein $C_1$-$C_4$-Alkyl bedeuten, wobei s für Null oder eine Zahl von 1 bis 4 steht, und $Y_c$, $Y_a$, $Y_e$ und $Y_f$ unabhängig voneinander Wasserstoff, Halogen oder $C_1$-$C_4$-Alkyl bedeuten, und PI für einen Polyimidblock mit einem mittleren Molekulargewicht $\overline{M}_n$ von 300-20'000 steht, enthaltend mindestens eine (wiederkehrende) Einheit der Formel IV

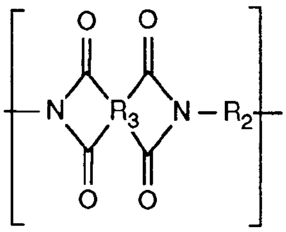 (IV),

worin

$R_3$ 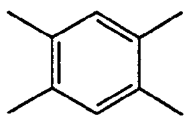 , 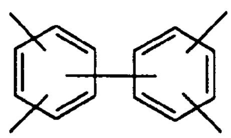 , 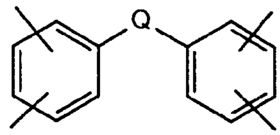 , 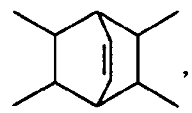 ,

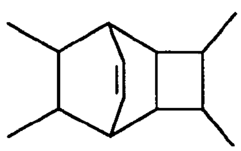 , 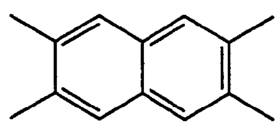 oder 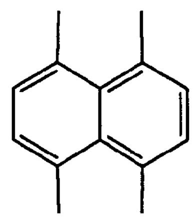

ist, und Q und $R_2$ die oben anbegebene Bedeutung haben, mit der Massgabe, dass 25-100 Mol-% aller Brükkenglieder

$R_2$ 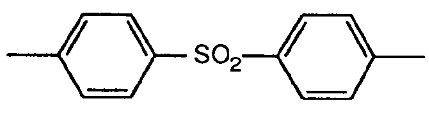 und/oder 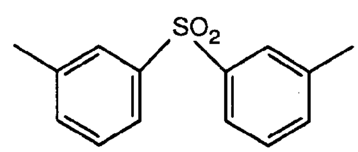

bedeuten, und der (cyclo-)aliphatische Anteil an Brückengliedern $R_2$ nicht mehr als 10 Mol-% beträgt.

Bevorzugte Blockcopolymere mit der wiederkehrenden Einheit der Formel II besitzen ein mittleres Molekulargewicht $\overline{M}_n$ von 4'000-40'000.

In bevorzugten Blockcopolymeren enthalten die Polyamidblöcke und/oder die Polyimidblöcke mehr als eine wiederkehrende Struktureinheit der Formel III bzw. der Formel IV. Dies ergibt für bevorzugte Polyamidblöcke bzw. Polyimidblöcke ein mittleres Molekulargewicht von 500-20'000.

In den obenstehenden Formeln bedeutet $R_1$ z.B. Phenylen-1,3; Phenylen-1,4; Naphthylen-1,5; Naphthylen-1,8; Biphenylen-3,3', Biphenylen-4,4', Oxy-bis-phenylen oder Sulfonyl-bis-phenylen. Bevorzugt ist Phenylen-1,3.

$R_2$ in den Formeln III und/oder IV ist erfindungsgemäss dadurch charakterisiert, dass in 25-100 Mol-% und insbesondere 50-100 Mol-% der im Copolymeren vorkommenden Bückenglieder $R_2$ Gruppen der Formeln

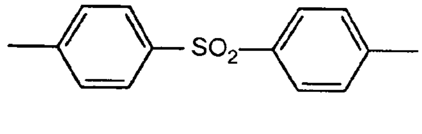 und/oder 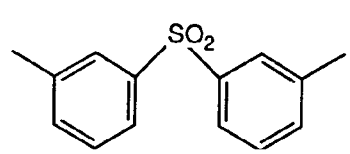

bedeuten. Dabei ist es nicht zwingend, dass sowohl Polyamid- als auch Polyimidblöcke solche Bückenglieder enthalten.

Bedeuten $R_1$ oder $R_2$ je eine Gruppe $-C_nH_{2n}-$, so handelt es sich beispielsweise um Ethylen-1,2; Propylen-1,3; Butylen-1,4; Pentylen-1,5; Hexylen-1,6; Heptylen-1,7; Octylen-1,8; Nonylen-1,9; Decylen-1,10; Dodecylen-1,12; Decylen-2,9; oder 2-Methylpentylen-1,5.

Sind $R_1$ oder $R_2$ eine Gruppe

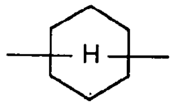 ,

so kann es sich um Cyclohexylen-1,2; Cyclohexylen-1,3 oder Cyclohexylen-1,4 handeln.

Weitere Beispiele für spezifische cycloaliphatische Gruppen $R_2$ sind

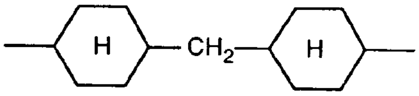 , 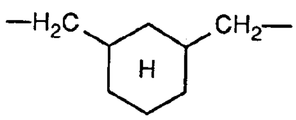 , 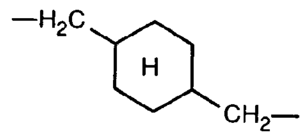 ,

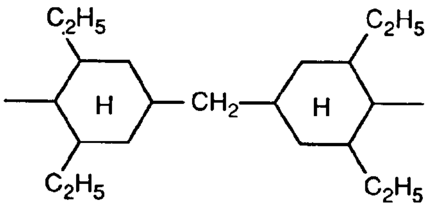 , 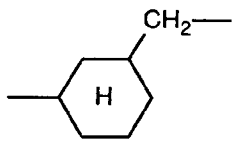 oder 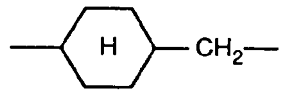 .

Beispiele für spezifische aromtische Gruppen $R_2$ sind Phenylen-1,2; Phenylen-1,3; Phenylen-1,4; Methylphenylen-2,4; 1,3,5-Trimethylphenylen-2,5; Xylylen-2,5; 4-Chlorphenylen-1,3; 2,5-Dichlorphenylen-1,4; oder eine der folgenden Gruppen

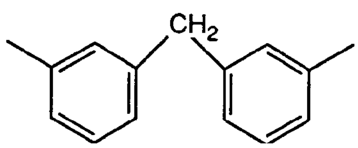 , 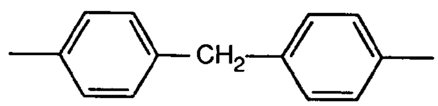 ,

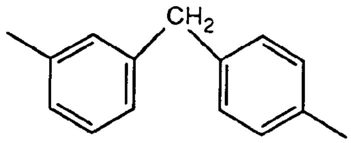 , 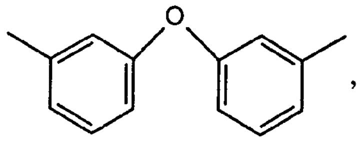 , 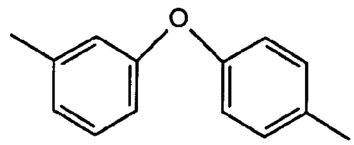 ,

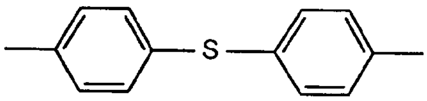 , 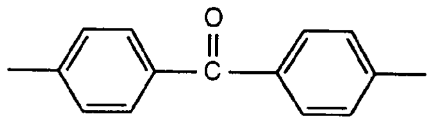 ,

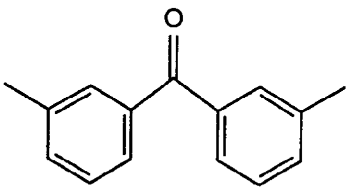 , 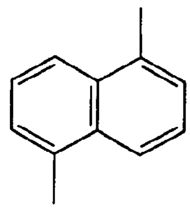 , 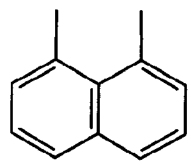 ,

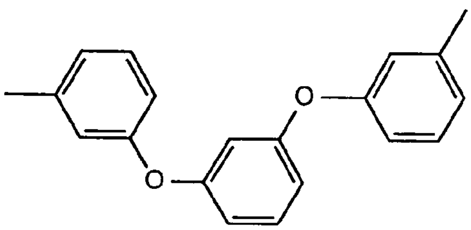 ,

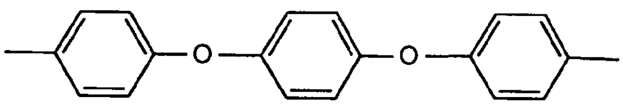 ,

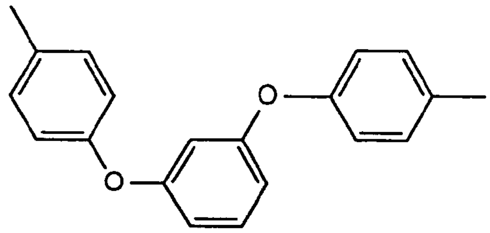
,
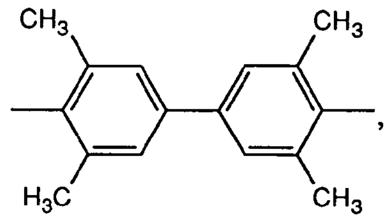
,
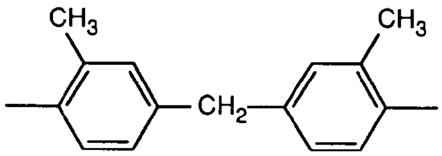
,
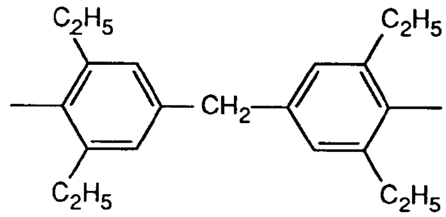
,
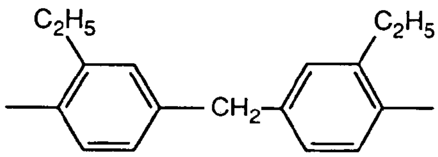
,
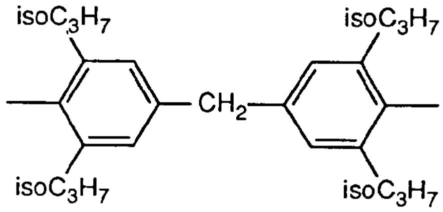
,
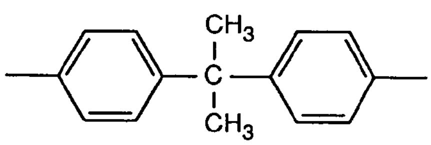
,
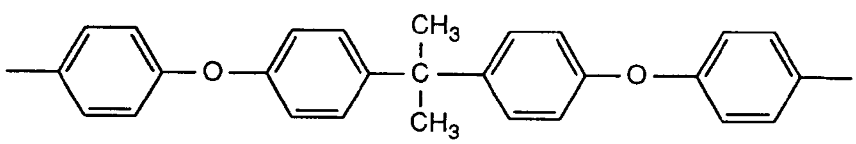
,
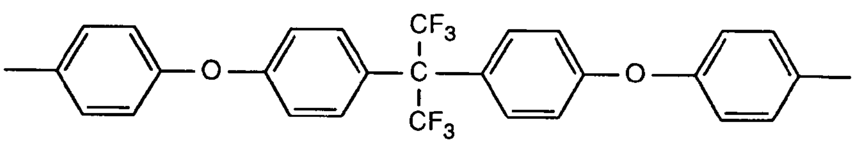
,
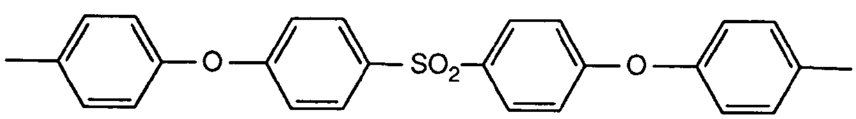
,
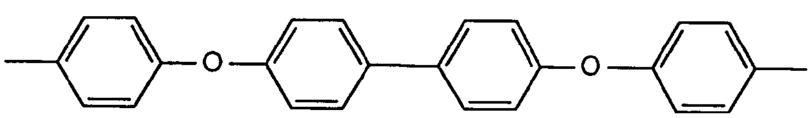
,
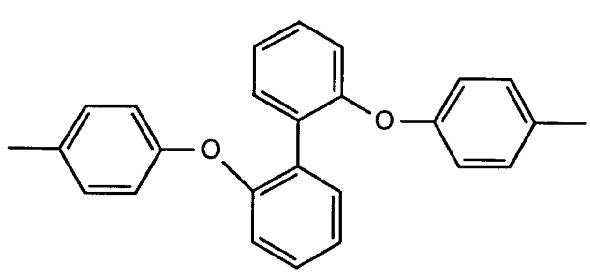

und insbesondere die Gruppen

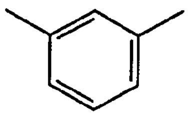, 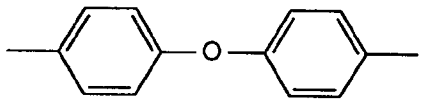, 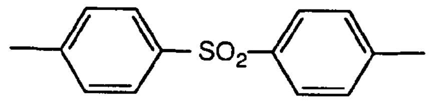

und

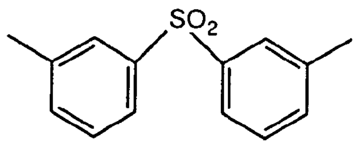

für $R_2$ in der Formel III, und die Gruppen

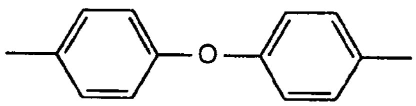, 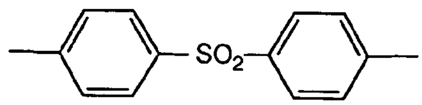

und

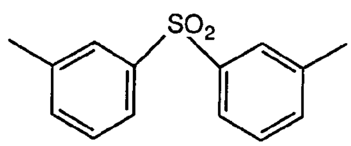

für $R_2$ in der Formel IV.

Enthalten die Brückenglieder $R_2$ einen zweiwertigen Rest Q, so handelt es sich beispielsweise um -$CH_2CH_2$- und -S-, und bevorzugt um -$CH_2$-,

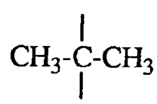 ,

-O-, -$SO_2$- oder -C(O)-. Enthält ein Bückenglied $R_2$ mehrere Rest Q, so können diese gleich oder verschieden sein.

Der vierwertige Rest $R_3$ leitet sich von einer Tetracarbonsäure ab, die fähig ist, ein Dianhydrid zu bilden. Es handelt sich dabei z.B. um Gruppen

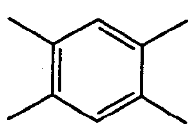, 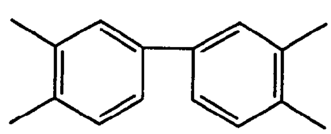

und insbesondere um

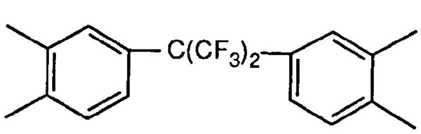, 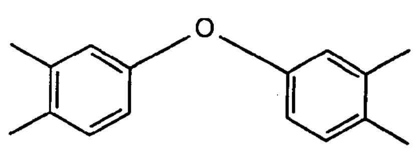,

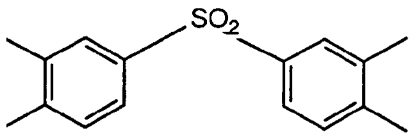 oder 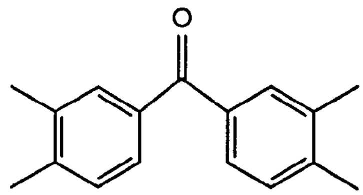 .

Beispiele für mögliche Kombinationen von Polyamid- und Polyimidblöcken zu PA-PI-Blockcopolymeren des Typs A sind in der EP-A-0 324 315 angegeben. Diese PA-PI-Blockcopolymeren können gemäss Beispiel 1 der EP-A-0 324 315 hergestellt werden.

Weitere geeignete, in polaren aprotischen Lösungsmitteln lösliche PA-PI-Blockcopolymere vom Typ B mit wiederkehrenden Einheiten der Formel II und einem mittleren Molekulargewicht $\overline{M}_n$ von 1'000 bis 50'000 sind dadurch gekennzeichnet, dass diese ein Verhältnis von Amid- zu Imidgruppen von etwa 4:1 bis 1:4 aufweisen und dass diese Polymeren in den Polyimidblöcken einen Gehalt von mindestens 2 Mol.%, insbesondere von mindestens 5 Mol%, bezogen auf den Gehalt an allen Carbonsäureresten im Copolymeren, an Resten der Formel

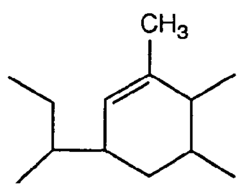

(DMCD Reste), die sich von 5-(2,5-Diketotetrahydrofurfuryl)-3-methylcyclohexan-1,2,-dicarbonsäure ableiten, aufweisen. Der Gehalt an DMCD Resten in den erfindungsgemäss verwendbaren PA-PI-Blockcopolymeren beträgt in der Regel 2 bis 80 Mol%, bezogen auf den Gehalt an allen Carbonsäureresten im Copolymeren.

Bevorzugt verwendete PA-PI-Blockcopolymere enthalten Kombinationen von Blöcken der Formeln Vb mit IVa und/oder IVc oder der Formeln IVb mit Va und/oder Vc

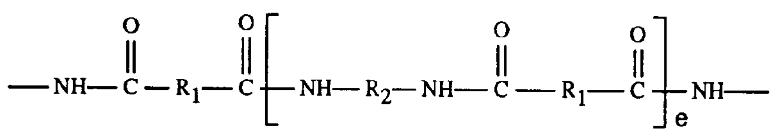 (IVa),

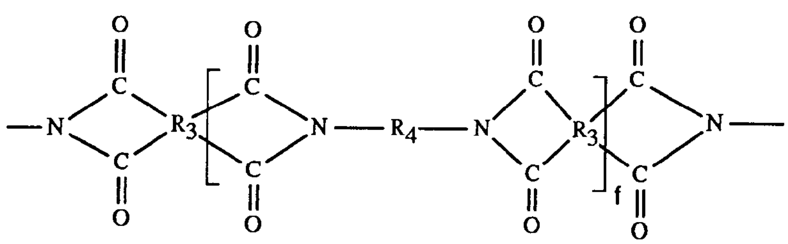 (IVb),

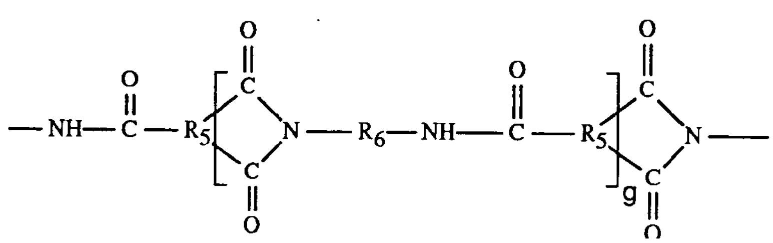 (IVc),

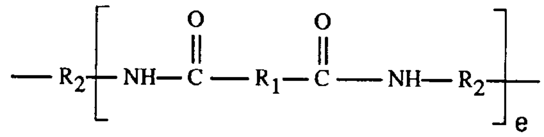 (Va),

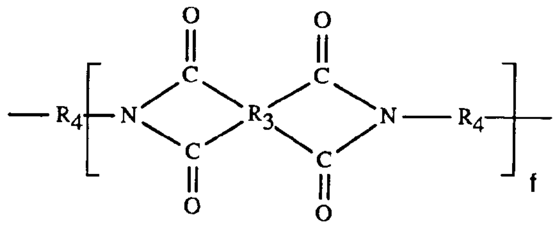 (Vb),

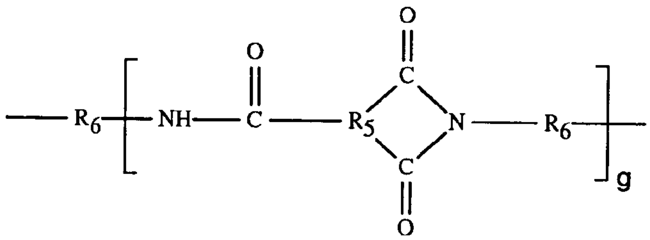 (Vc),

worin die Indizes e, f und g unabhängig voneinander ganze Zahlen von 1 bis 100 sind, $R_1$ und $R_2$ die gleiche Bedeutung wie in Formel III haben, $R_3$ ein Rest der Formeln

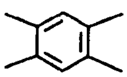 , 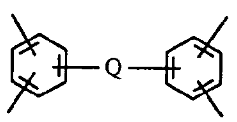 , 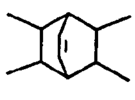 , 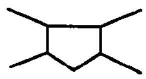 , 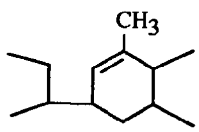 ,

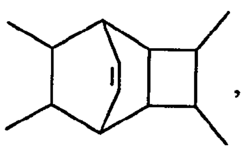 , 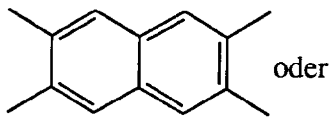 oder 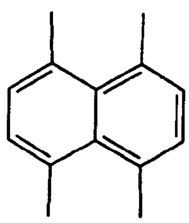 ist,

worin Q eine direkte Bindung darstellt oder $-CH_2-$, $-CH_2CH_2-$, $CH(CH_3)-$, $C(CH_3)_2-$,

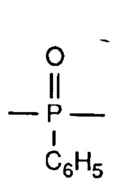

$-C(CF_3)_2-$, -O-, -S-, $-SO_2-$ oder -CO- bedeutet, $R_5$ ein Rest der Formel

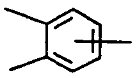

ist, und $R_4$ und $R_6$ unabhängig voneinander eine der für $R_2$ definierten Bedeutungen besitzen, mit der Massgabe, dass 25-100 Mol % aller Reste $R_3$ die Formel

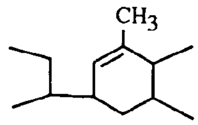

aufweisen.

In den Formeln IVa und Va haben $R_1$ und $R_2$ die gleiche bevorzugte Bedeutung wie in Formel III. Der vierwertige Rest $R_3$ leitet sich von einer Tetracarbonsäure ab, die in der Lage ist, ein Dianhydrid zu bilden. Dabei handelt es sich bevorzugt um Reste der Formeln

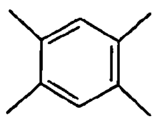 , 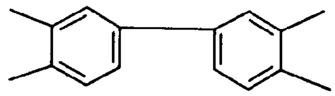 , 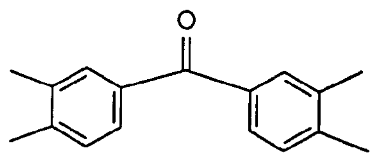 ,

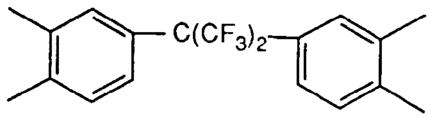 , 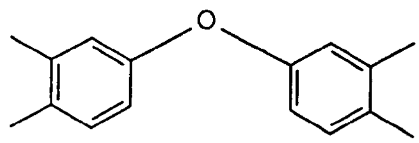

oder

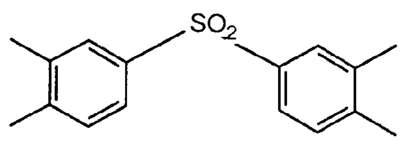

und ganz besonders um

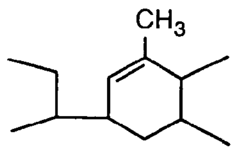 .

Der Anteil der DMCD Reste in den Polyimidblöcken der erfindungsgemäss zu verwendenden Blockcopolymeren beträgt vorzugsweise 50 bis 100 Mol %, bezogen auf den Anteil der Tetracarbonsäurereste in diesen Blöcken.

$R_5$ ist vorzugsweise ein Rest der Formel

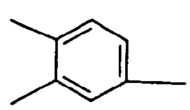 .

Mögliche Kombinationen von Polyamid- mit Polyimidblöcken zu PA-PI-Blockcopolymeren des Typs B sind in der EP-A-0 381 619 angegeben. Diese PA-PI-Blockcopolymeren können gemäss Beispiel 1 der EP-A-0 381 619 hergestellt werden.

Ebenfalls geeignete, in polaren aprotischen Lösungsmitteln lösliche PA-PI-Blockcopolymere vom Typ C mit einem durchschnittlichen Molekulargewicht $\overline{M}_n$ von 1'000 bis50'000 enthalten die Kombination von Blöcken der Formeln IVa mit Vb und/oder Vc oder der Formeln IVb mit Va und/oder Vc oder der Formeln IVc mit Va und/oder Vb, mit der anderen Massgabe, dass 10-100 Mol %, bevorzugt 25-100 Mol %, insbesondere 50-100

%, aller $R_2$, $R_4$ und $R_6$, bezogen auf die Gesamtmenge dieser Reste, die Formel

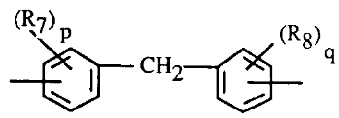

aufweisen, worin p 1 oder 2 und q Null, 1 oder 2 sind, $R_7$ und $R_6$ je ein $C_1$-$C_8$-Alkyl bedeuten oder worin je zwei zueinander ortho-ständige Reste $R_7$ und $R_6$ jeweils zusammen eine Alkylengruppe mit 2 bis 10 C-Atomen bilden.

Ein Alkylsubstituent $R_7$ oder $R_8$ in der oben angegebenen Formel kann verzweigt oder bevorzugt geradkettig sein. Bevorzugt wird geradkettiges $C_1$-$C_6$Alkyl. Beispiele dafür sind Methyl, Ethyl, n-Propyl, n-Butyl, n-Pentyl und n-Hexyl. Besonders bevorzugt werden Methyl und Ethyl.

Bilden die Reste $R_7$ oder $R_6$ zusammen eine Alkylenkette, so handelt es sich dabei vorzugsweise um Tri- oder insbesondere um Tetramethylen.

Das bevorzugte Verhältnis von Amidgruppen zu Imidgruppen in den zu verwendenden PA-PI-Blockcopolymeren beträgt 4:1 bis 1:4.

Die mittleren Molekulargewichte $\overline{M}_n$ in den Polyamidblöcken IVa und Va oder in den Polyimidblöcken IVb und Vb oder in den Polyamidimidblöcken IVc und Vc der PA-PI-Blockcopolymeren C betragen im allgemeinen 300 bis 20'000, vorzugsweise 500 bis 10'000.

Neben den oben erwähnten Kombinationen von zwei Blöcken können die erfindungsgemäss zu verwendenden PA-PI Blockcopolymeren C auch Dreiblockkombinationen der Formeln IVa, IVb und Vc oder der Formeln IVa, IVc und Vb oder der Formeln IVb, IVc und Va enthalten.

Bevorzugt verwendet man PA-PI Blockcopolymere C, die im wesentlichen aus Polyamidblöcken IVa und Polyimidblöcken IVb oder aus Polyamidblöcken Va und Polyimidblöcken IVb bestehen.

Beispiele für mögliche Kombinationen von Polyamid- mit Polyimidblöcken zu PA-PI-Blockcopolymeren C sind in der EP-A-0 381 620 angegeben. Diese PA-PI-Blockcopolymeren können gemäss Beispiel 1 der EP-A-0 3 81 620 hergestellt werden.

Weitere geeignete, in polaren aprotischen Lösungsmitteln lösliche PA-PI-Blockcopolymere vom Typ D mit einem durchschnittlichen Molekulargewicht $\overline{M}_n$ von 1'000 bis 50'000, vorzugsweise 5'000 bis 40'000, enthalten die Kombination von Blöcken der Formeln IVa mit Vb und/oder Vc oder der Formeln IVb mit Va und/oder Vc oder der Formeln IVc mit Va und/oder Vb, mit der anderen Massgabe, dass 25-100 Mol % aller Reste $R_2$, $R_4$ und $R_6$ auf die Gesamtmenge dieser Reste die Formel

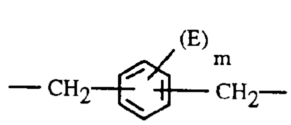 und/oder 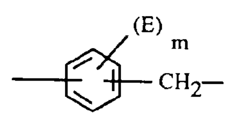

aufweisen, worin E ein $C_1$-$C_8$-Alkyl oder Halogen bedeutet und m für eine Zahl von 0 bis 4 steht.

Der Alkylsubstituent E in den oben angegebenen Formeln kann verzweigt oder bevorzugt geradkettig sein. Bevorzugt wird geradkettiges $C_1$-$C_6$Alkyl. Beispiele dafür sind Methyl, Ethyl, n-Propyl, n-Butyl, n-Pentyl und n-Hexyl. Besonders bevorzugt wird Methyl.

E als Halogen ist vorzugsweise Chlor oder Brom, und m steht vorzugsweise für Null oder die Zahl 1.

Das Verhältnis von Polyamidblöcken zu Polyimidblöcken oder zu Polyamidimidblöcken in den erfindungsgemäss zu verwendenden Blockcopolymeren D wird im allgemeinen durch die gewünschte Löslichkeit dieser Copolymeren in polaren, aprotischen Lösungsmitteln bestimmt. Die jeweiligen Anteile dieser Blöcke und der Gehalt an Xylylendiamineinheiten und/oder an Aminobenzylamineinheiten werden so gewählt, dass das Blockcopolymere in polaren, aprotischen Lösungsmitteln löslich ist.

Das bevorzugte Verhältnis von Amidgruppen zu Imidgruppen in den zu verwendenden PA-PI-Blockcopolymeren D beträgt 4:1 bis 1:4.

Die mittleren Molekulargewichte $\overline{M}_n$ der Polyamidblöcke IVa oder Va oder der Polyimidblöcke IVb oder Vb oder der Polyamidimidblöcke IVc oder Vc in den PA-PI-Blockcopolymeren D betragen im allgemeinen 300 bis 20'000, vorzugsweise 500 bis 10'000.

Neben den oben erwähnten Kombinationen von zwei Blöcken können die erfindungsgemäss zu verwendenden PA-PI-Blockcopolymeren D auch Dreiblockkombinationen der Formeln IVa, IVb und Vc oder IVa, IVc und Vb oder IVb, IVc und Va enthalten.

Besonders bevorzugt sind PA-PI-Blockcopolymere D die im wesentlichen aus den wiederkehrenden Struktureinheiten der Formeln IVa und IVb oder IVb und Va bestehen.

Ganz besonders bevorzugte PA-PI-Blockcopolymere dieses Typs enthalten die Xylylendiamineinheiten oder die Aminobenzylamineinheiten oder eine Kombination von Xylylendiamineinheiten und Aminobenzylamineinheiten nur in den Polyimidblöcken IVb oder Vb.

Beispiele für mögliche Kombinationen von Polyamid- mit Polyimidblöcken zu PA-PI-Blockcopolymeren D sind in der EP-A-0 381 621 angegeben. Diese PA-PI-Blockcopolymeren können nach Beispiel 1 der genannten EP-A hergestellt werden.

Polyarylenether mit den wiederkehrenden Strukturelementen der Formel Ia und gegebenenfalls Ib sind bekannt, beispielsweise aus den EP-Anmeldungen 383 725, 388 358 oder 404 724, und zum Teil auch im Handel erhältlich, beispielsweise unter der Handelsbezeichnung Victrex® der Firma ICI.

Die erfindungsgemäss zu verwendenden Polyarylenether (b) weisen im allgemeinen eine reduzierte Viskosität von 0,1 bis 2,0 dl/g auf, was einem Molekulargewicht von etwa 1'000 bis 500'000 entspricht.

Die Polyarylenether (b) können hergestellt werden, indem man beispielsweise ein oder mehrere Bisphenole der Formel A

$$HO\text{-}Ar_1\text{-}OH \qquad (A)$$

oder ein Gemisch aus einem Bisphenol der Formel A und einer darin bis zu 95 Mol-% enthaltenen, vom Bisphenol der Formel A verschiedenen carbocyclisch-aromatischen Dihydroxyverbindung der Formel B

$$HO\text{-}Ar_3\text{-}OH \qquad (B),$$

worin $Ar_1$ und $Ar_3$ die gleiche Bedeutung wie in Formel Ia und Ib haben, in etwa stöchiometrischen Mengen mit einer oder mehrerer Dihalogenverbindungen der Formel C

$$Hal\text{-}Ar_2\text{-}Hal \qquad (C),$$

worin $Ar_2$ die gleiche Bedeutung wie in Formel Ia oder Ib hat und Hal für ein Halogenatom, vorzugsweise Chlor- oder Fluoratom, steht, in Gegenwart von Alkali und in einem aprotischen Lösungsmittel polykondensiert, bis der erhaltene Polyarylenether (b) eine reduzierte Viskosität von 0,1 bis 2,0 dl/g aufweist, gemessen an einer Lösung von 1 g Polymeren in 100 ml NMP bei 25°C.

Vorzugsweise setzt man bei dieser Polykondensation das Bisphenol der Formel A oder die Dihydroxyverbindung der Formel B in einem geringen stöchiometrischen Überschuss ein, so dass Polyarylenether mit OH-Endgruppen erhalten werden.

Weitere spezifische Endgruppen können direkt bei der Synthese duch Zusatz geeigneter Monomerkomponenten oder durch Folgereaktionen hergestellt werden. Bevorzugte Endgruppen dieser Art sind Aminoendgruppen, die beispielsweise bei der Polykondensation der Polyarylenether unter Zusatz von p-Aminophenol oder m-Aminophenol erhalten werden können.

Vorzugsweise sind die erfindungsgemäss zu verwendenden Polyarylenether (b) mit den Strukturelementen der Formeln Ia und Ib unsubstituiert.

Der Rest $Ar_1$ in der Formel Ia kann beispielsweise einen Rest der folgenden Formeln

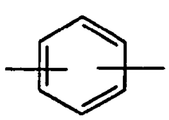 , 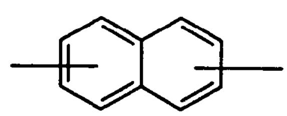 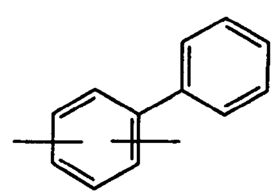

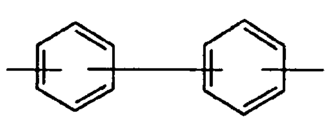 , 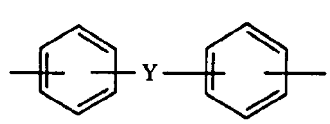 ,

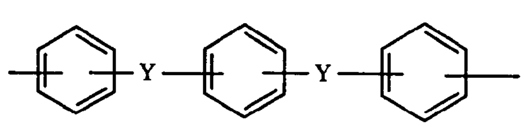 ,

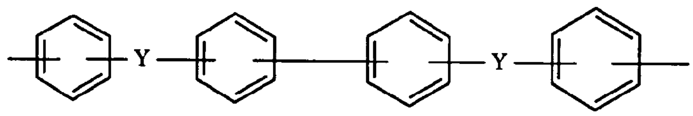

oder

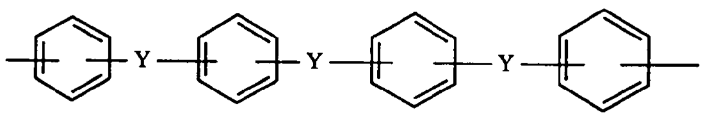

bedeuten,
worin Y für $-CH_2-$, $-C(CH_3)_2-$, $-C(CH_3)(C_6H_5)-$, $-C(CF_3)_2-$, -S-, -SO-, $-SO_2-$, -O- oder -CO- steht und die aromatischen Ringe unsubstituiert oder einfach oder mehrfach alkylsubstituiert sind, wobei der Alkylrest 1-4 C-Atome enthält, oder beispielsweise einen der folgenden carbocyclisch-aromatischen Reste darstellen,

(1)

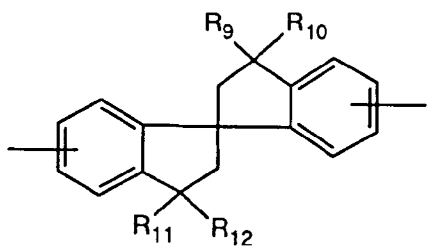

,

worin $R_9$, $R_{10}$, $R_{11}$ und $R_{12}$ unabhängig voneinander je ein Wasserstoffatom oder ein $C_1$-$C_4$-Alkyl bedeuten,

(2)

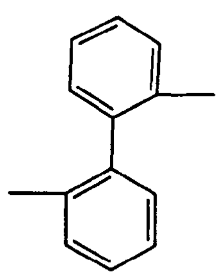

oder

(3)

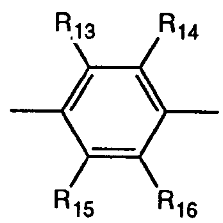

,

worin einer der Reste $R_{13}$, $R_{14}$, $R_{15}$ und $R_{16}$ Phenyl oder mit einer bis drei $C_1$-$C_4$-Alkylgruppen substituiertes Phenyl ist und die übrigen Reste $R_{13}$, $R_{14}$, $R_{15}$ und $R_{16}$ unabhängig voneinander ein Wasserstoffatom, $C_1$-$C_4$-Alkyl, Phenyl oder mit einer bis drei $C_1$-$C_4$-Alkylgruppen substituiertes Phenyl sind,

(4)

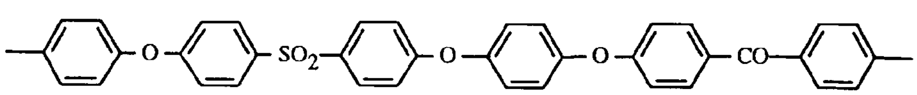

,

welcher der Rest eines Kondensationsproduktes aus 4,4′-Bis-(4″-hydroxyphenoxy)-diphenylsulfon und 4,4′-Difluorbenzophenon ist,

(5)

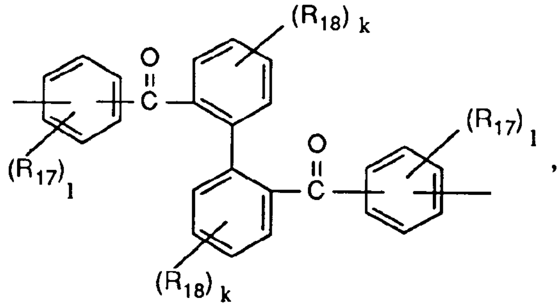

worin $R_{17}$ ein $C_1$-$C_4$-Alkyl, $C_1$-$C_4$-Alkoxy, $C_6$-$C_{12}$-Aryl, $C_2C_4$-Alkenyl oder Halogenatom bedeutet, wobei 1 für Null oder eine Zahl von 1-4 steht und $R_{18}$ ein $C_1$-$C_4$-Alkyl, $C_1$-$C_4$-Alkoxy, $C_6$-$C_{12}$-Aryl oder Halogenatom bedeutet, wobei k für Null oder eine Zahl von 1-4 steht, welcher Rest sich von der entsprechenden Dihydroxyverbindung ableitet, die gemäss dem im Journal of Chemical Society, C, 1969, 2388 ff, und in Journal of Chemical Society 1938, 1561 ff, beschriebenen Verfahren hergestellt werden kann,

(6)

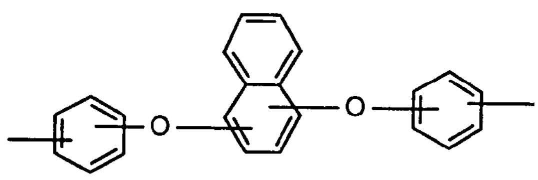

oder

(7)

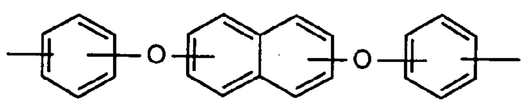

worin die aromatischen Ringe unsubstituiert oder durch ein oder mehrere $C_1$-$C_4$-Alkylgruppen, $C_1$-$C_4$-Alkoxygruppen, Phenylgruppen oder Halogenatome substituiert sind, welche Reste sich von den entsprechenden Bis-(hydroxyphenoxy)-naphthalinen ableiten, die nach an sich bekannten Methoden, wie beispielsweise in der DE-OS 3 636 561 beschrieben, synthetisiert werden können, indem man zum Beispiel ein unsubstituiertes oder durch ein oder mehrere $C_1$-$C_4$-Alkylgruppen $C_1$-$C_4$-Alkoxygruppen, Phenylgruppen oder Halogenatome substituiertes Dihydroxynaphthalin der Formel

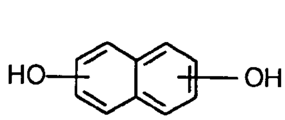 oder 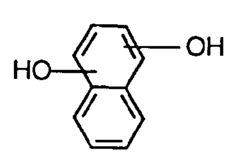

mit einem unsubstituierten oder durch ein oder mehrere $C_1$-$C_4$-Alkylgruppen, $C_1$-$C_4$-Alkoxygruppen, Phenylgruppen oder Halogenatomen substituierten Halogenbenzol der Formel

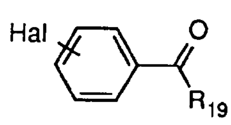 ,

worin Hal für Halogen, insbesondere Fluor oder Chlor, steht und $R_{19}$ $C_1$-$C_4$-Alkyl bedeutet, in Gegenwart von

Alkali zu einem Bis-(acylphenoxy)-naphthalin umsetzt, das mit einer Persäure zu einem Bis-(acyloxyphenoxy)-naphthalin oxidiert und anschliessend alkalisch zum Bis-(hydroxyphenoxy)-naphthalin hydrolysiert werden kann,

(8)

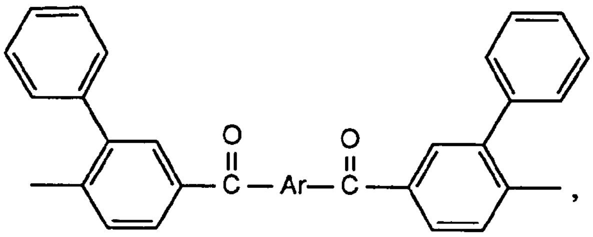

worin die aromatischen Ringe unsubstituiert oder durch ein oder mehrere $C_1$-$C_4$-Alkyle, $C_1$-$C_4$-Alkoxy oder Halogenatome substituiert sind und Ar einen zweiwertigen aliphatischen, cycloaliphatischen, araliphatischen oder aromatischen Rest mit bis zu 50 C-Atomen bedeutet, welcher Rest (8) sich von dem entsprechenden Diphenol ableitet, das hergestellt werden kann, indem man 1 Mol einer aromatischen Dicarbonsäure oder eines aromatischen Dicarbonsäuredichlorids der Formel

Hal-CO-Ar-CO-Hal,

worin X für ein Halogenatom, vorzugsweise Chloratom, steht und Ar die gleiche Bedeutung wie oben hat, mit 2 Mol eines unsubstituierten oder durch ein oder mehrere $C_1$-$C_4$-Alkyle, $C_1$-$C_4$-Alkoxy oder Halogenatome substituierten 2-Alkoxybiphenyls in Gegenwart von $FeCl_3$ als Katalysator im Temperaturbereich von 80-160°C umsetzt und die erhaltene unsubstituierte oder substituierte Verbindung der Formel

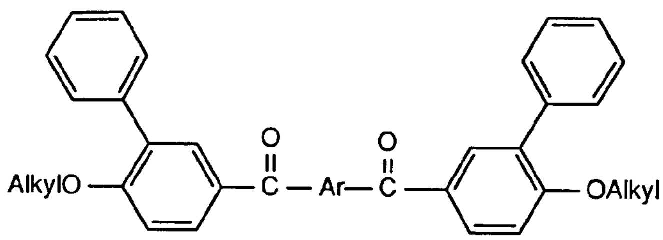

worin Ar die gleiche Bedeutung wie oben hat und Alkyl für ein $C_1$-$C_4$-Alkyl steht, mit der 2- bis 6-fachen Gewichtsmenge $AlCl_3$, bezogen auf die Gewichtsmenge der Verbindung der obigen Formel, im Temperaturbereich von 40-100°C umsetzt, wobei das entsprechende Diphenol erhalten wird,

(9)

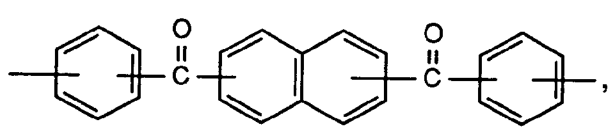

worin im Strukturelement die aromatischen Ringe unsubstituiert oder durch ein oder mehrere $C_1$-$C_4$-Alkyle, $C_1$-$C_4$-Alkoxy oder Halogenatome substituiert sind, welche Reste sich von den entsprechenden Diphenolverbindungen ableiten, die bekannt sind, beispielsweise aus der DE-OS 3 804 159 und den US-Patenten 4 447 592 und 4 276 226,

(10) 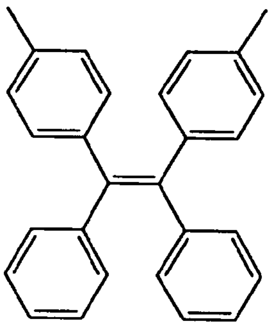 , (11) 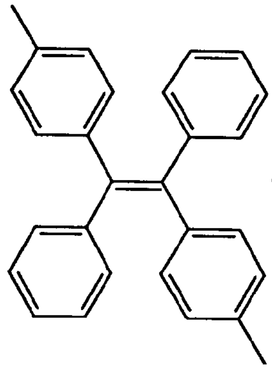 oder (12) 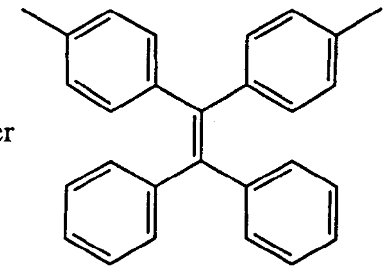

welche Reste sich von den entsprechenden Diphenolen ableiten, die bekannt sind und deren Herstellung in Ind. J. Chem., 16B, 601 (1978), in Org. Synth. Coll. Vol II, 573 (1943) und Coll. Vol. IV, 914 (1963) beschrieben wird, und Reste der Formel

(13)

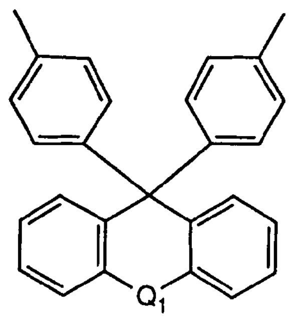 ,

worin $Q_1$ für eine direkte Bindung, -O-, $-CH_2-$ oder -CO- steht, welche Reste sich von 9,9-Bis-(4-hydroxyphenyl)-fluoren, 9,9-Bis-(4-hydroxyphenyl)-xanthen, 9,9-Bis-(4-hydroxyphenyl)-9,10-dihydroanthracen und 10,10-Bis-(4-hydroxyphenyl)-anthron ableiten, welche bekannt sind und beispielsweise nach dem im Journal of Applied Polymer Science, Vol. 27, 3289-3312 (1982) beschriebenen Verfahren hergestellt werden können, wobei 9,9-Bis-(4-hydroxyphenyl)-fluoren auch im Handel erhältlich ist,

(14)

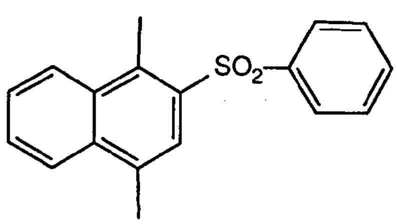 oder 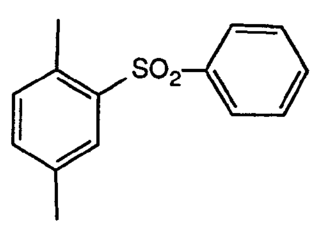

die sich von 1,4-Dihydroxynaphthenyl-(2)-phenylsulfon oder 2,5 -Dihydroxydiphenylsulfon ableiten, welche gemäss Chemische Berichte 28, Seite 1316 aus Naphthochinon und Benzolsulfonsäure oder gemäss Chemische Berichte 27, Seite 3259 aus p-Benzochinon und Benzolsulfon-säure synthetisiert werden können,

(15)

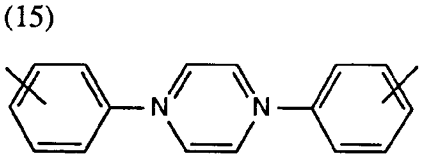 und bevorzugt 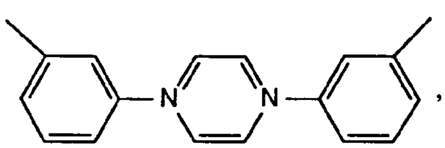 ,

wobei das N,N'-Bis-(3-hydroxyphenyl)-piperazin im Handel erhältlich ist,

(16)

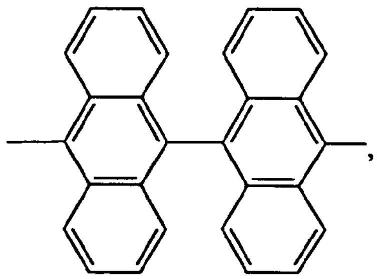

,

der sich von 10,10'-Dihydroxy-(9,9')-bianthryl ableitet, das beispielsweise gemäss Annalen der Chemie 379, Seite 58, durch oxidative Kupplung aus 9-Anthrol mittels Eisen(III)-chlorid synthetisiert werden kann,

(17)

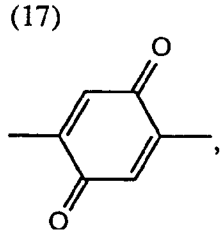

,

der sich von 2,5-Dihydroxybenzochinon ableitet, das im Handel erhältlich ist,

(18)

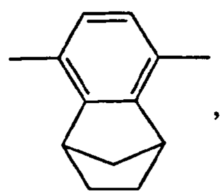

,

der sich von 3,6-Dihydroxybenzonorbornan ableitet, das im Handel erhältlich ist,

(19)

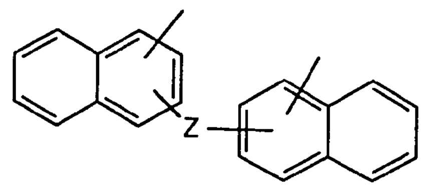 und bevorzugt 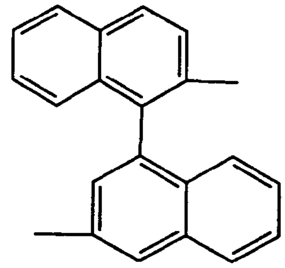 ,

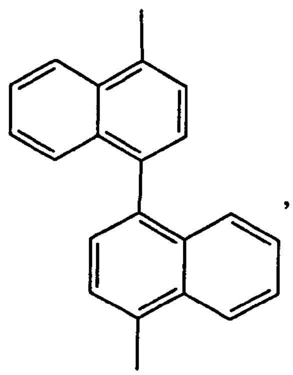 , 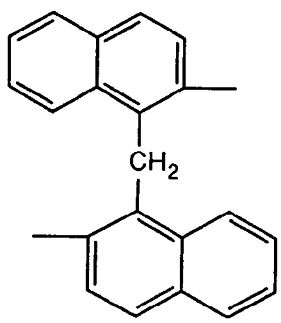 oder 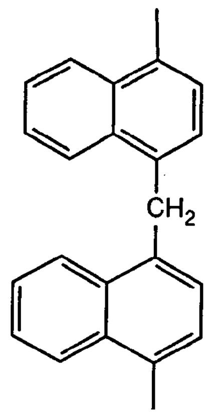 ,

worin Z für eine direkte Bindung oder für $-CH_2-$, $-C(CH_3)_2-$, $-C(CH_3)(C_6H_5)-$, $-C(CF_3)_2-$, -S-, -SO-, $-SO_2-$, -O- oder -CO- steht, wobei die angegebenen Reste sich von den entsprechenden Binaphtholen ableiten, die beispielsweise aus dem entsprechenden Naphthol durch oxidative Kupplung weiteres Eisen-(III)-chlorid synthetisiert werden können oder über den Handel bezogen werden können.

Vorzugsweise bedeutet der Rest $Ar_1$ einen der folgenden Reste

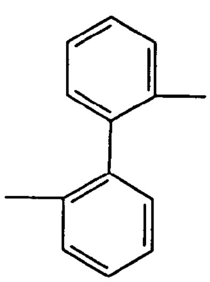 , 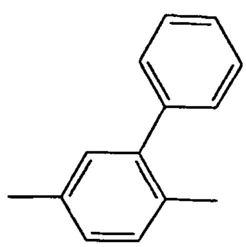 , 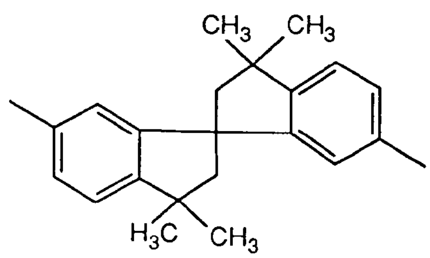 ,

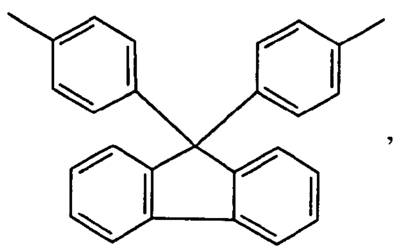 , 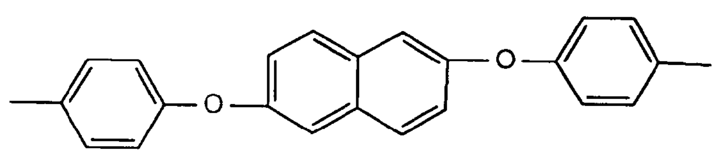

oder

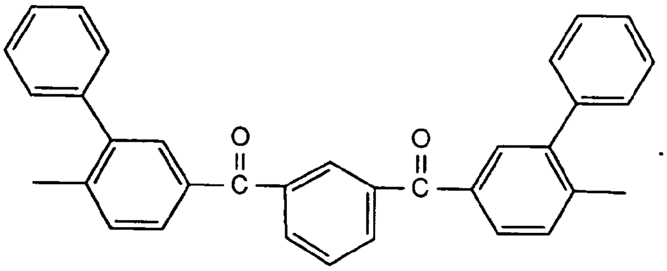

.

Die erfindungsgemäss zu verwendenden Polyarylenether (b), worin $Ar_3$ für einen Spirobiindanrest steht, sind aus der EP-A-0 383 725 bekannt. Polyarylenether (b) mit einem Rest des 2,2'-Dihydroxybiphenyls sind in der EP-A-0 404 724 beschrieben und solche mit einem unsubstituierten oder substituierten Phenylhydrochinonrest in der EP-A-0 388 358.

Der Rest $Ar_2$ in der Formel Ia oder Ib kann beispielsweise einen Rest der folgenden Formeln

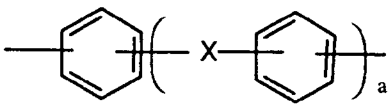 , 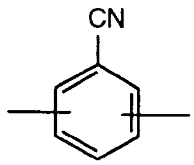 , 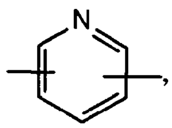 , 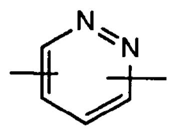

oder

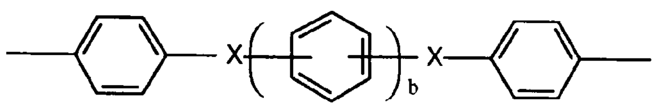

darstellen,
worin a für 1, 2 oder 3, b für 2 oder 3 und X für -SO-, $-SO_2-$ oder -CO- stehen.

Vorzugsweise bedeutet der Rest $Ar_2$ einen Rest der Formeln

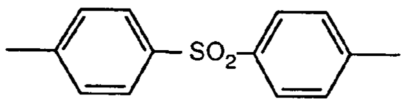

oder

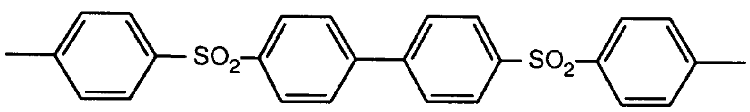

und insbesondere den Rest

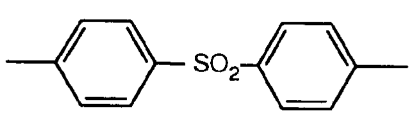

.

Der Rest $Ar_3$ in der Formel Ib, der vom Rest $Ar_1$ verschieden ist, kann beispielsweise einen Rest der Formeln

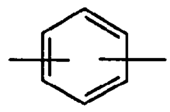, 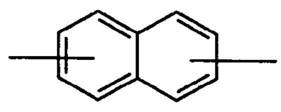, 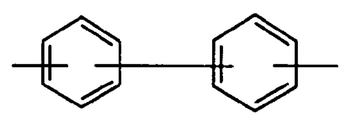

oder

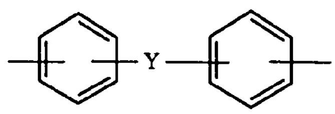

bedeuten, worin Y für $-CH_2-$, $-C(CH_3)_2-$, $-C(CH_3)(C_6H_5)-$, $-C(CF_3)_2-$, -S-, $-SO_2-$, -O- oder -CO-steht.

Vorzugsweise bedeutet der Rest $Ar_3$ einen der folgenden Reste

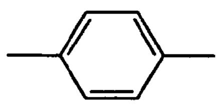, 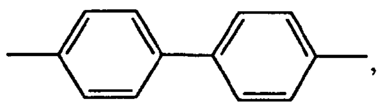, 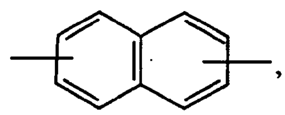,

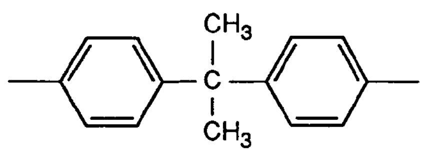, 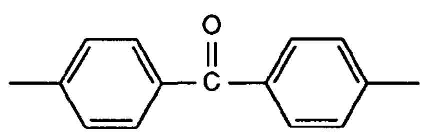,

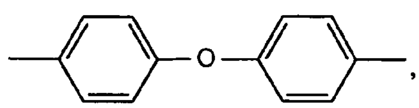, 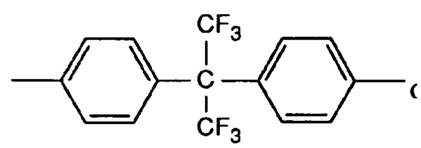

oder

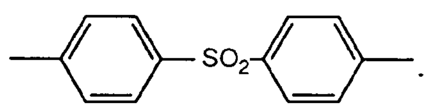.

Die Polyarylenether mit den wiederkehrenden Strukturelementen der Formel IA und Ib, worin $AR_1$ einen Rest der Formel (14), (15), (16), (17), (18) oder der Formel

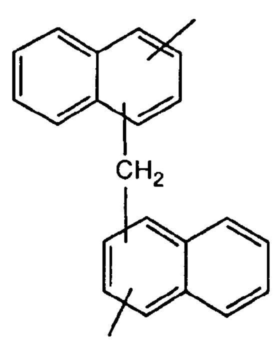

bedeutet, sind in der Literatur noch nicht beschrieben worden und stellen ebenfalls einen Erfindungsgegenstand dar.

Gegenstand vorliegender Erfindung sind somit auch Polyarylenether mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 10 Mol-% eines wiederkehrenden Strukturelementes der Formel Ic

$-[O - Ar_1' - O - Ar_2]-$ (Ic)

und 0 bis 95 Mol-% eines wiederkehrenden Strukturelementes der Formel Ib

$[O - Ar_3 - O - Ar_2]$ (Ib)

enthält, worin $Ar_1'$ einen Rest der Formel

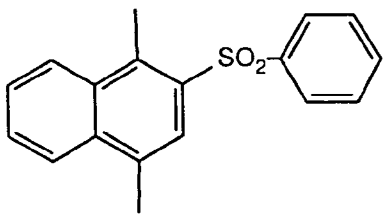
,
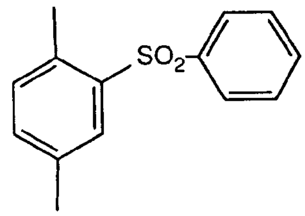
,

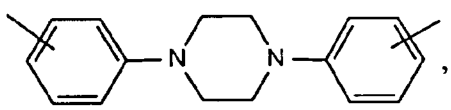
,
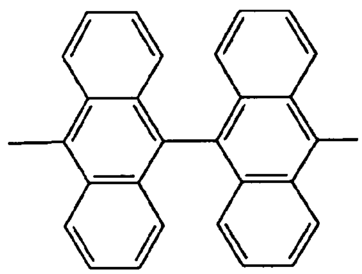
,
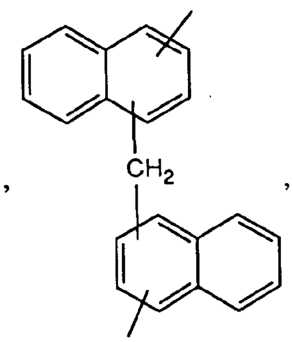
,

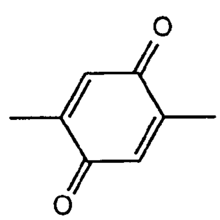
oder
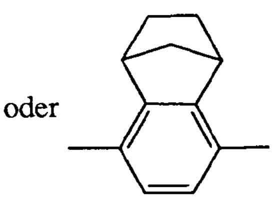

bedeutet, und $Ar_2$ und $Ar_3$ die gleiche Bedeutung wie in Formel Ia und Ib haben.

Vorzugsweise bedeutet $Ar_1'$ in Formel Ic einen Rest der Formeln

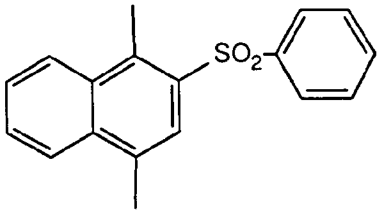
,
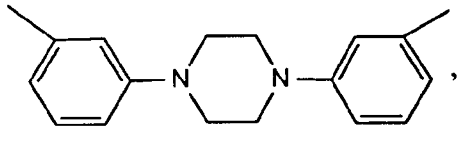
,

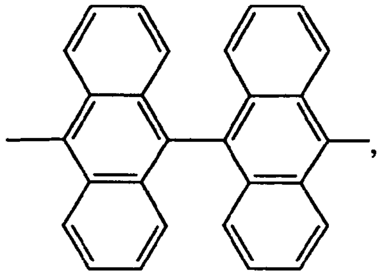, 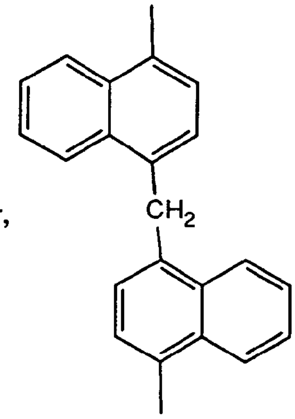, 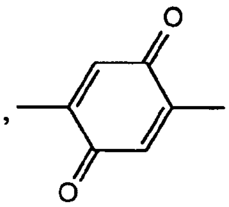

oder

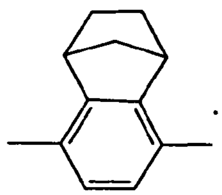.

Die in den erfindungsgemässen Gemischen einsetzbaren Epoxidharze sind in allgemeinen solche mit mindestens zwei direkt an ein Sauerstoff-, Stickstoff- oder Schwefelatom bzw. -atome gebundenen Glycidyl- bzw. β-Methylglycidylgruppen.

Als Beispiele solcher Harze seien Polyglycidyl- und Poly-(β-methylglycidyl)-ester genannt, die man durch Umsetzung einer zwei oder mehrere Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure, dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, sowie von aromatischen Polycarbonsäuren, wie Phthalsäure, Isophthalsäure und Terephthalsäure, ableiten.

Weitere Beispiele sind Polyglycidyl- und Poly-(β-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Ether lassen sich aus acyclischen Alkoholen, wie Ethylenglykol, Diethylenglykol und höheren Poly-(oxyethylen)-glykolen,

Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit und Polyepichlorhydrinen, aus cycloaliphatischen Alkoholen, wie Resorcit, Chinit, Bis-(4-hydroxycyclohexyl)-methan, 2,2-Bis-(4-hydroxycyclohexyl)-propan und 1,1-Bis-(hydroxymethyl)-3-cyclohexen, und aus Alkoholen mit aromatischen Kernen, wie N,N-Bis-(2-hydroxyethyl)-anilin und p,p'-Bis-(2-hydroxyethylamino)-diphenylmethan, herstellen. Man kann sie ferner aus einkernigen Phenolen, wie Resorcin und Hydrochinon, und mehrkernigen Phenolen, wie Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan und 2,2-Bis-(3,5-dibrom-4-hydroxyphenyl)-propan, sowie aus Aldehyden, wie Formaldehyd, Acetaldehyd, Chloral und Furfurol, mit Phenolen, wie Phenol selbst und durch Chloratome oder Alkylgruppen mit jeweils bis zu 9 Kohlenstoffatomen ringsubstituiertem Phenol, wie 4-Chlorphenol, 2-Methylphenol und 4-tert.-Butylphenol, gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminwasserstoffatome enthaltenden Aminen, wie Anilin, n-Butylamin, Bis-(4-aminophenyl)-methan, m-Xylylendiamin und Bis-(4-methylaminophenyl)-methan, erhalten werden, Triglycidylisocyanurat, sowie N,N'-Diglycidylderivate von cyclischen Alkylenharnstoffen, wie

Ethylenharnstoff und 1,3-Propylenharnstoff, und von Hydantoinen, wie 5,5-Dimethylhydantoin.

Als cycloaliphatische Epoxidharze können, beispielsweise Bis-(2,3-epoxycyclopentyl)-ether, 2,3-Epoxycyclopentylglycidylether, 1,2-Bis-(2,3-epoxycyclopentyloxy)-ethan oder 3,4-Epoxycyclohexylmethyl-3′,4′-epoxycyclohexancarboxylat eingesetzt werden.

Poly-(S-glycidyl)-verbindungen sind zum Beispiel die Di-S-glycidylderivate von Dithiolen, wie Ethan-1,2-dithiol und Bis-(4-mercaptomethylphenyl)-ether.

In Betracht kommen auch Epoxidharze, in welchen die Glycidylgruppen an Heteroatome verschiedener Art gebunden sind, beispielsweise das N,N,O-Triglycidylderivat des 4-Aminophenols oder des 2,2-(4-Aminophenyl-4′-hydroxyphenyl)-propans, der Glycidylether/Glycidylester der Salicylsäure, N-Glycidyl-N′-(2-glycidyloxypropyl)-5,5-dimethylhydantoin und 2-Glycidyloxy-1,3-bis-(5,5-dimethyl-1-glycidylhydantoin-3-yl)-propan. Die verwendeten Epoxidharze können auch durch Alkyle, Alkenyle, Aryle, Halogenatome, Aryloxy oder Alkoxy substituiert sein. Ein bevorzugtes Beispiel dafür ist o,o′-Diallylbisphenol A-diglycidylether.

Gewünschtenfalls kann ein Gemisch aus Epoxidharzen verwendet werden.

Bevorzugte Epoxidharze sind Polyglycidylether von Phenolen und Novolaken, wie Bisphenol A-, Bisphenol F-, und Bisphenol S-diglycidylether, Resorcindiglycidylether oder Cyclohexandimethanoldiglycidylether, N,N,O-Triglycidyl-p-aminophenol, N,N,O-Triglycidyl-m-aminophenol, Triglycidylisocyanurat, Tetraglycidyl-4,4′-diaminodiphenylmethan und Tetra(-p-glycidyloxyphenyl)ethan und 3,4-Epoxycyclohexyl--3′,4′-epoxycyclohexancarboxylat.

Insbesondere verwendet man als Epoxidharz für die erfindungsgemässen Gemische Bisphenol A-diglycidylether, Tetraglycidyl-4,4′-diaminodiphenylmethan, Tetra-(-p-glycidyloxyphenyl)-ethan und N,N,O-Triglycidyl-p-aminophenol.

Ganz besonders bevorzugt ist N,N,O-Triglycidyl-p-aminophenol.

Weiterhin können die erfindungsgemässen Gemische den Zusatz eines weiteren technischen Polymeres (d) aus der Gruppe der Polyamide, Polyimide, Polyetherimide, Polyesterimide, Polyhydantoine oder Polyparabansäuren aufweisen, wie sie für elektronische und elektrische Zwecke verwendet werden. Diese Polymeren sind überwiegend im Handel erhätlich oder können nach bekannten Verfahren synthetisiert werden. Erwähnt seien beispielsweise die folgenden Handelsprodukte:

Ultem® der General Eletric (Polyetherimid),
Matrimid 5218 der CIBA-GEIGY (Polyimid).

Die erfindungsgemässen Gemische zeichnen sich durch eine gute Verarbeitbarkeit aus und können beispielsweise als Matrixharze, Lacke, Klebstoffe und Ueberzugsmassen zur Herstellung von industriellen Erzeugnissen aller Art, wie beispielsweise faserverstärkten Verbundstoffen, Laminaten, Verklebungen, Schaumstoffen, Ueberzügen, Beschichtungen, Filmen, Folien oder Presskörpern verwendet werden.

Vor der Verarbeitung der als Pulver, Film oder insbesondere als Lösung vorliegenden Gemische können übliche Zusatzstoffe, wie beispielsweise Füllstoffe, Pigmente, Stabilisatoren oder Verstärkungsmittel, wie Kohlenstoff-, Bor-, Metall- oder Glasfasern, oder auch Zusätze von weiteren Polymeren wie z.B. Teflon® zugegeben werden. Insbesondere kann der Zusatz von sogenannten Verlaufsmitteln, beispielsweise das Produkt BYK®S 706 der Firma BYK-Chemie, Wesel vorteilhaft sein. Die erfindungsgemässen Gemische enthalten vorzugsweise zusätzlich ein Verlaufsmittel.

Aufgrund der guten Löslichkeit der erfindungsgemässen Gemische in polaren aprotischen Lösungsmitteln, wobei diese mit anderen gebräuchlichen Lösungsmitteln, wie halogenierten Kohlenwässerstoffen oder aliphatischen Kohlenwasserstoffen, verdünnt werden können, lassen sich die Gemische vorteilhaft aus einer Lösung heraus zu Filmen verarbeiten oder zur Herstellung von Beschichtungen auf Substrate aller Art verwenden.

Ein weiterer wichtiger Vorteil der erfindungsgemässen Gemische liegt darin, dass Lösungen mit hohen Konzentrationen bei niedrigen Viskositäten verwendet werden können. Üblicherweise können niedrig-viskose Polymerlösungen von Polyamid-Polyimiden nur mit geringen Konzentrationen oder bei der Verwendung von Polymeren mit niedrigen Molekulargewichten hergestellt werden. Hohe Konzentrationen sind aber bei der Beschichtung erwünscht, um die Lösungsmittelmenge möglichst gering zu halten. Da die Eigenschaften von Polymeren direkt mit dem Molekulargewicht korrelieren, können in der Regel auch keine Polymeren mit niedrigen Molekulargewichten eingesetzt werden. Dies würde eine wesentliche Verschlechterung der Eigenschaften zur Folge haben. Bei den erfindungsgemässen Gemischen ist es aber dagegen möglich, Polymere mit niedrigen Molekulargewichten und damit niedrigen Lösungsviskositäten einzusetzen, die Beschichtungen mit sehr guten Eigenschaften ergeben.

Als geeignete Substrate seinen erwähnt: Metalle oder Legierungen, wie Kupfer, Messing, Aluminium, Eisen oder Stahl; Asbest- oder Glasfäsermaterialien; Polymere, wie Cellulosematerialien (Celluloseester oder -ether, Papier); Polyester, Polyamide, Polyimide oder Polyurethane.

Nach der Applikation und dem Trocknen der Beschichtung in der Regel in einem Temperaturbereich von 150 bis 300°C, beispielsweise 45 Minuten bei 180°C unter Infrarot-Bestrahlung, ist diese lösungsmittelbeständig. Die lösungsmittelstabilen Beschichtungen zeichnen sich ferner durch eine gute Haftung, vorzugsweise auf Metalle, und durch eine hohe Flexibilität aus. Mit den erfindungsgemässen Gemischen lassen sich somit Beschichtungen herstellen, bei denen die guten mechanischen Eigenschaften der PA-PI-Blockcopolymeren, wie hohe Flexibilität, erhalten bleiben, keine Versprödung durch den Zusatz von Epoxidharzen feststellbar ist und eine gute Haftfestigkeit erzielt wird.

Gegenstand der Erfindung sind auch einfach beschichtete Laminate, vorzugsweise Metallaminate, insbesondere Kupferlaminate, enthaltend als Beschichtung ein erfindungsgemässes Gemisch.

Es wurde ferner gefunden, dass mit den erfindungsgemässen Gemischen beschichtete Metallfolien ohne Verwendung zusätzlicher Verklebungshilfen, wie beispielsweise Acrylatkleber, direkt zu mehrschichtigen Laminaten verklebt werden können.

Gegenstand vorliegender Erfindung sind somit auch Laminate, vorzugsweise Metalllaminate und insbesondere Kupferlaminate, in denen die Verklebung aus dem erfindungsgemässen Gemisch, enthaltend ein PA-PI-Blockcopolymer (a), einen Polyarylenether (b) und ein Epoxidharz (c), besteht. Die Herstellung der Verklebung erfolgt dabei unter Druck und bei einer Temperatur, die ein zumindest geringes Fliessen des PA-PI-Blockcopolymer/Epoxidharz-Gemisches erlaubt und beispielsweise in einem Temperaturbereich zwischen 200 und 300°C erfolgen kann.

Bevorzugte Anwendung solcher Laminate, die sehr flexibel sind und mehrmals ohne Bruch gefaltet werden können, erfolgt in der Elektronikindustrie zur Herstellung von Schaltungen.

In den erfindungsgemässen Gemischen richten sich die Verhältnisse der einzelnen Komponenten im allgemeinen nach den Molekulargewichten des PA-PI-Blockcopolymeren und des Polyarylenethers, nach dem Gehalt an Endgruppen und nach der Glasübergangstemperatur der verwendeten Polymeren, nach der gewünschten Temperatur- und Lösungsmittelstabilität des fertigen Laminates und nach der gewünschten Verarbeitungstemperatur. So wird man beispielsweise bei einem Blockcopolymeren und einem Polyarylenether mit niedrigen Molekulargewichten einen verhältnismässig hohen Anteil an Epoxidharz einsetzen. Ebenso wird man bei dem Wunsch nach einer niedrigen Verarbeitungstemperatur bevorzugt ein Gemisch von Polymerstrukturen mit einer niedrigen Glasübergangstemperatur und gleichzeitig einen hohen Anteil an Epoxidharz verwenden. Wird beispielsweise ein Laminat mit einer besonders hohen Temperaturstabilität gefordert, so setzt man vorzugsweise Gemische aus PA-PI-Blockcopolymere und Polyarylenether mit einer hohen Glasübergangstemperatur und einem verhältnismässig nur geringen Anteil an Epoxidharz ein.

Die in den folgenden Beispielen verwendeten PA-PI-Blockcopolymeren Polyarylenether (PAE) und Epoxidharze (EP) werden wie folgt hergestellt oder sind im Handel erhältlich.

PA-PI-Blockcopolymer A

Gemäss dem in Beispiel 1 der EP-A-0 324 315 beschriebenen Verfahren wird aus 80,56 g (0,25 Mol) 3,3′,4,4′-Benzophenontetracarbonsäuredianhydrid, 25,90 g (0,1042 Mol) 4,4′-Diaminodiphenylsulfon und 25,90 g (0,1042 Mol) 3,3′-Diaminodiphenylsulfon ein Polyamidsäureblock hergestellt und mit 76,90 g (0,378 Mol) Isophthalsäuredichlorid, 51,83 g (0,2084 Mol) 4,4′-Diaminodiphenylsulfon und 51,83 g (0,2084 Mol) 3,3′-Diaminodiphenylsulfon zum Polyamid-Polyamidsäure-Blockcopolymer umgesetzt, das anschliessend cyclisiert wird. Die inhärente Viskosität des PA-PI-Blockcopolymers A (0,5 g Polymer in 100 ml NMP bei 25°C) beträgt 0,35 dl/g.

PA-PI-Blockcopolymer B

Analog dem Synthesebeispiel 1 der EP-A-0 381 621 wird aus 80,56 g (0,25 Mol) 3,3′,4,4′-Benzophenontetracarbonsäuredianhydrid, 12,96 g (0,0521 Mol) 4,4′-Diaminodiphenylsulfon, 12,96 g (0,0521 Mol) 3,3′-Diaminodiphenylsulfon und 14,20 g (0,1042 Mol) m-Xylylendiamin ein Polyamidsäureblock hergestellt, der mit 76,93 g (0,4693 Mol) Isophthalsäurechlorid, 51,84 g (0,2084 Mol) 4,4′-Diaminodiphenylsulfon und 51,84 g (0,2084 Mol) 3,3′-Diaminodiphenylsulfon zum Polyamid-Polyamidsäure-Blockcopolymer umgesetzt wird, das anschliessend zum PA-PI-Blockcopolymer B cyclisiert wird. Die inhärente Viskosität (0,5 g Polymeres in 100 ml NMP bei 25°C) des Blockcopolymeren beträgt 0,51 dl/g.

PA-PI-Blockcopolymer C

Gemäss dem in Beispiel 1 der EP-A-0 324 315 beschriebenen Verfahren wird aus 94,15 g (0,32 Mol) 3,3′,4,4′-Biphenyltetracarbonsäuredianhydrid, 34,74 g (0,1400 Mol) 4,4′-Diaminodiphenylsulfon und 34,74 g (0,1400 Mol) 3,3′-Diaminodiphenylsulfon ein Polyamidsäureblock hergestellt und mit 8,60 g (0,0424 Mol) Isophthalsäuredichlorid, 10,00 g (0,0403 Mol) 4,4′-Diaminodiphenylsulfon und 9,93 g (0,0400 Mol) 3,3′-Diaminodiphenylsulfon bei Zugabe von 6, 18 g Butylenoxid zum Polyamid-Polyamidsäure-Blockcopolymer umgesetzt, das anschliessend mit 157,12 g (1,5526 Mol) Triethylamin und 160,96 g (0,5780 Mol) Acetanhydrid cyclisiert wird. Die inhärente Viskosität des PA-PI-Blockcopolymers C (0,5 g Polymer in 100 ml NMP bei 25°C) beträgt 0,36 dl/g.

PA-PI-Blockcopolymer D

Gemäss dem in Beispiel 1 der EP-A-0 381 620 beschriebenen Verfahren wird aus 32,22 g (0,10 Mol) 3,3′,4,4′-Benzophenontetracarbonsäuredianhydrid, 65,46 g (0,30 Mol) Pyromellithsäuredianhydrid, 108,02 g (0,4250 Mol) 4,4′-Diamino-3,3′-diethyldiphenylmethan ein Polyamidsäureblock hergestellt und mit 21,10 g (0,1046 Mol) Isophthalsäuredichlorid und 19,25 g (0,0757 Mol) 4,4′-Diamino-3,3′-diethyldiphenylmethan mit 15,66 g Butylenoxid zum Polyamid-Polyamidsäure-Blockcopolymer umgesetzt, das anschliessend mit 166,31 g (1,6435 Mol) Triethylamin und 164,55 g (1,612 Mol) Acetanhydrid cyclisiert wird. Die inhärente Viskosität des PA-PI-Blockcopolymers D (0,5 g Polymer in 100 ml NMP bei 25°C) beträgt 0,49 dl/g.

PA-PI-Blockcopolymer E

Analog dem Synthesebeispiel 12 der EP-A-0 381 621 wird aus 40,28 g (0,125 Mol) 3,3′,4,4′-Benzophenontetracarbonsäuredianhydrid, 26,33 g (0,125 Mol) Trimellithsäureanhydridchlorid, 36,28 g (0,146 Mol) 4,4′-Diaminodiphenylsulfon und 19,89 g (0,146 Mol) m-Xylylendiamin ein Polyamidsäureblock hergestellt, der mit 73,22 g (0,3610 Mol) Isophthalsäurechlorid, 79,97 g (0,3210 Mol) 4,4′-Diaminodiphenylsulfon mit 66,27 g Butylenoxid zum Polyamid-Polyamidsäure-Blockcopolymer umgesetzt wird, das anschliessend mit 94,86 g (0,9375 Mol) Triethylamin und 95,70 g (0,9375 Mol) Acetanhydrid cyclisiert wird. Die inhärente Viskosität (0,5 g Polymer in 100 ml NMP bei 25°C) des Blockcopolymeren E beträgt 0,46 dl/g.

PAE 1: Polyethersulfon Victrex® 5003 P (Handelsprodukt des ICI) mit dem wiederkehrenden Strukturelement

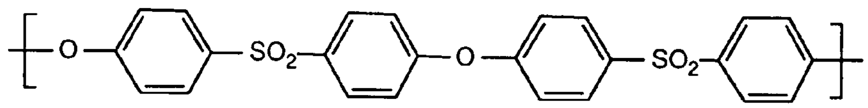

und einer red. Viskosität (1 g Polymer in 100 ml NMP) von 0,64 dl/g.

PAE 2: Polyethersulfon der Struktur

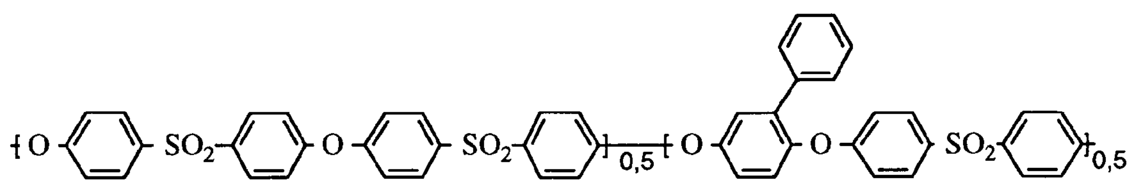

hergestellt aus Phenylhydrochinon, 4,4′-Dihydroxydiphenylsulfon und 4,4′-Dichlordiphenylsulfon gemäss Beispiel 4 der EP-A-0 388 358, mit einer reduzierten Viskosität (1 g Polymeres in 100 ml NMP) von 0,58 dl/g.

Synthese der Polyarylenether

Verfahren A

Synthese des Polyarylenethers PAE 24

Ein Gemisch aus 58,60 g (0,02047 Mol) 1,1′-Bi-2-naphthol, 58,6 g (0,2142 Mol) wasserfreiem Kaliumcarbonat, 216 g Diphenylsulfon und 100 g Xylol wird in einem Planschliffkolben mit Rührer unter Stickstoff bis auf eine Badtemperatur von 200°C erhitzt, wobei eine Xylol/Wasser-Mischung abdestilliert. Dieser Destillationsvorgang wird nach etwa 1,5 Stunden (h) durch kurzzeitiges (etwa 10 Minuten) Anlegen eines Vakuums im Bereich von 1 bis 5 mbar abgeschlossen.

Sodann werden weiterhin unter Stickstoff 57,45 g (0,2001 Mol) 4,4′-Dichlordiphenylsulfon zu der Reaktionsmischung gegeben und die Temperatur auf 251 °C erhöht, die für 1 h beibehalten wird. Danach wird die Temperatur für 3h auf 271 °C angehoben. Die Reaktionsmischung zeigt mit fortschreitender Reaktionszeit eine deutliche Viskositätszunahme.

Nach kurzem Abkühlen wird die Raktionsmischung dem Kolben entnommen und nach Erstarren pulverisiert. Zur Isolierung des Polymeren wird das Gemisch mit Wasser unter Zusatz von Essigsäure, anschliessend mehrfach mit Wasser und schliesslich mit einem Wasser/Aceton-Gemisch (1:4) extrahiert. Das so gereinigte Polymere wird danach im Vakuumtrockenschrank bis zu einer Temperatur von 240°C getrocknet.

Ein auf diese Weise hergestelltes Polyarylenethersulfon-Copolymere besitzt eine reduzierte Viskosität (bestimmt an 1 g Polymeren gelöst in 100 ml N-Methylpyrrolidon bei 25°C) von 0,30 dl/g.

Die Synthese der mit dem Verfahren A bezeichneten Polyarylenether wird analog durchgeführt.

Verfahren B:

Die Synthese erfolgt gemäss dem Verfahren A, wobei nach dem Extraktionsschritt das Polymere in Methylenchlorid gelöst und nach Filtration durch Eingiessen in Isopropanol ausgefällt wird.

Verfahren C:

Die Synthese wird analog Verfahren A durchgeführt, mit der Ausnahme, dass die Dihalogenkomponente anfänglich zugegeben wird und nicht erst nach der Diphenolatbildung.

Verfahren D:

Die Synthese wird analog Verfahren C durchgeführt, mit der Ausnahme, dass auf Zusatz eines Schleppmittels (Xylol) verzichtet wird.

Tabelle: Synthese der Polyarylenether

| PAE | Struktur | Synthesekomponenten | Reaktions-bedingungen | red. Visk. [dl/g] | Tg [°C] |
|---|---|---|---|---|---|
| PAE 3 | 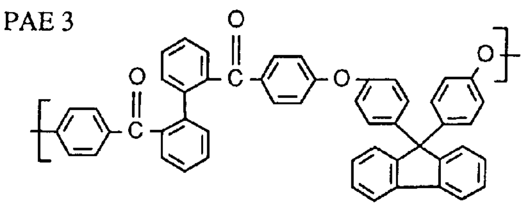<br>(gemäss Beispiel 11 aus EP-A-0 451 104) | 9,9-Bis-(4-hydroxyphenyl)-fluoren (0,0501 Mol)<br>2,2'-Bis-(4-fluorbenzoyl)-biphenyl (0,0500 Mol)<br>Kaliumcarbonat (0,50525 Mol) | **Verfahren B**<br>1h/250°C<br>1h/275°C<br>2h/280°C | 0,42 | 221 |
| PAE 4 | 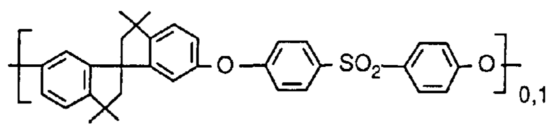<br>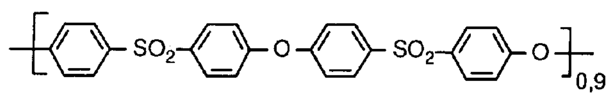<br>(gemäss Beispiel 5 aus EP-A-0 383 725) | 6,6-Dihydroxy-3,3,3',3'-tetramethyl-1,1'-spiro-biindan (0,0402 Mol)<br>4,4'-Dihydroxydiphenylsulfon (0,3608 Mol)<br>4,4'-Dichlordiphenylsulfon (0,4000 Mol)<br>Kaliumcarbonat (0,4246 Mol) | **Verfahren A**<br>1h/228°C<br>1h/253°C<br>3h/281°C | 0,29 | 206 |

Tabelle: Fortsetzung

| PAE | Struktur | Synthesekomponenten | Reaktions-bedingungen | red. Visk. [dl/g] | Tg [°C] |
|---|---|---|---|---|---|
| PAE 5 | 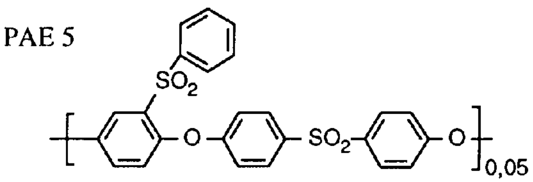 | | **Verfahren A** | | |
| | | 2,5-Dihydroxydiphenylsulfon (0,0068 Mol) | 1h/248°C | 0,46 | 223 |
| | | 4,4'-Dihydroxydiphenylsulfon (0,0953 Mol) | 4h/287°C | | |
| | 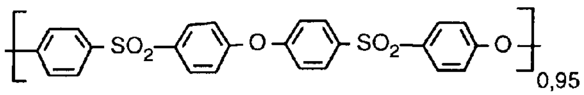 | Kaliumcarbonat (0,1187 Mol) | | | |
| PAE 6 | 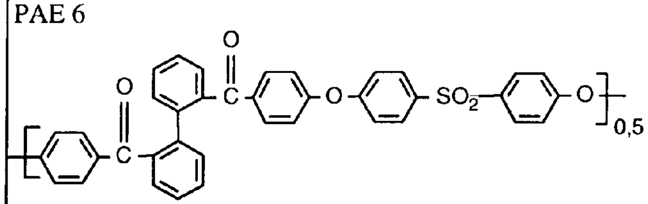 | | **Verfahren A** | | |
| | | 4,4'-Dihydroxydiphenylsulfon (0,1004 Mol) | 1h/250°C | 0,30 | 205 |
| | | 2,2'-Bis-(4-fluorbenzoyl)-biphenyl (0,0500 Mol) | 1h/275°C | | |
| | 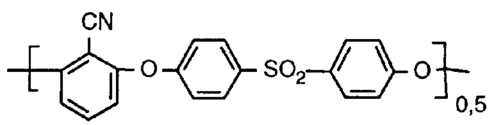 | 2,6-Dichlorbenzonitril (0,0500 Mol) | 4h/280°C | | |
| | | Kaliumcarbonat (0,1100 Mol) | | | |
| | (gemäss Beispiel 13 aus EP-A-0 451 104) | | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 7 | | | **Verfahren A** | | |
| | 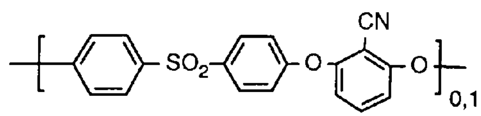 | 4,4'-Dihydroxydiphenylsulfon (0,2010 Mol) | | 0,63 | 230 |
| | | 2,6-Difluorbenzonitril (0,0206 Mol) | 1h/227°C | | |
| | 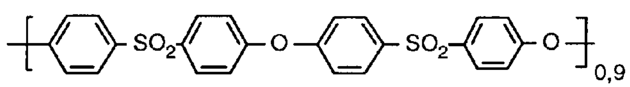 | 4,4'-Dichlordiphenylsulfon (0,1800 Mol) | 1h/255°C | | |
| | | Kaliumcarbonat (0,2240 Mol) | 3h/282°C | | |
| PAE 8 | 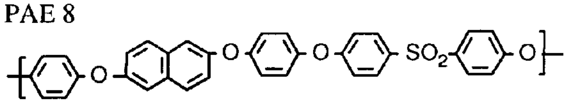 | 2,6-Bis-(4-hydroxyphenoxy)-naphtahlin (0,0125 Mol) | **Verfahren C** 1h/232°C | 0,17 | 201 |
| | 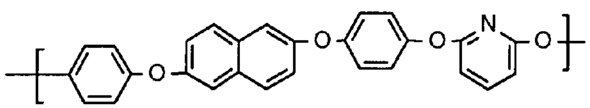 | 4,4'-Dihydroxydiphenylsulfon (0,0376 Mol) | 1h/252°C | | |
| | 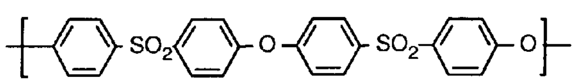 | 4,4'-Dichlordiphenylsulfon (0,0400 Mol) | 3h/279°C | | |
| | 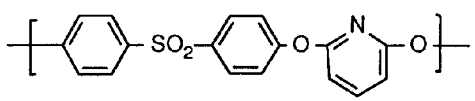 | 2,6-Dichlorpyridin (0,0101 Mol) | | | |
| | gemäss Beispiel II.12 aus EP-A-0 467 826 | Kaliumcarbonat (0,0555 Mol) | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 9 | | | **Verfahren C** | | |
| | 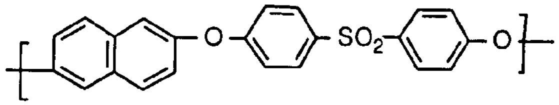 | 2,6-Dihydroxynaphthalin (0,2031 Mol) | 1h/231°C | 0,70 | 226 |
| | | 4,4'-Dichlordiphenylsulfon (0,2001 Mol) | 1h/251°C | | |
| | | Kaliumcarbonat (0,2207 Mol) | 3h/282°C | | |
| PAE 10 | | | **Verfahren A** | | |
| | 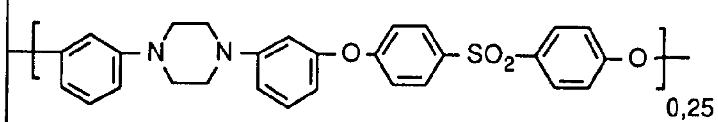 | N,N'-Bis-(3-hydroxyphenyl)-piperazin (0,0250 Mol) | 30 min/225°C<br>1h/250°C<br>2h/260°C | 0,66 | 193 |
| | | 4,4'-Dihydroxydiphenylsulfon (0,0751 Mol) | 1h 30 min/270°C<br>1h 10 min/280°C | | |
| | 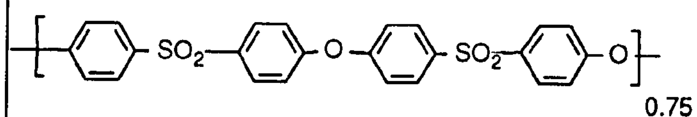 | 4,4'-Dichlordiphenylsulfon (0,1000 Mol) | | | |
| | | Kaliumcarbonat (0,1050 Mol) | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 11 | | | **Verfahren A** | | |
| | 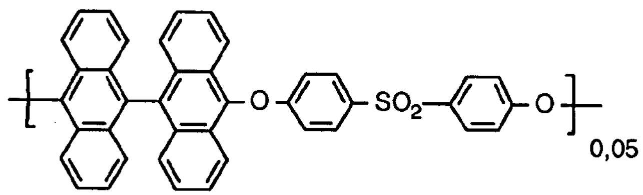 | 10,10'-Dihydroxy-9,9'-bianthryl (0,0051 Mol) | | 0,30 | 225 |
| | | 4,4'-Dihydroxydiphenylsulfon (0,0959 Mol) | 1h/250°C | | |
| | | 4,4'-Dichlordiphenylsulfon (0,1001 Mol) | 4h/283°C | | |
| | 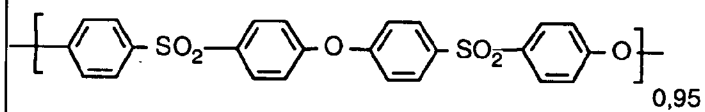 | Kaliumcarbonat (0,1056 Mol) | | | |
| PAE 12 | | | **Verfahren B** | | |
| | 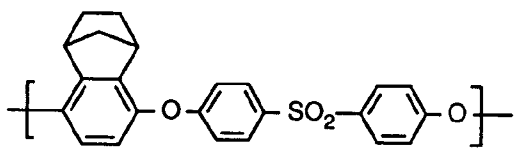 | 3,6-Dihydroxybenzonorbornan (0,1006 Mol) | 1h/225°C | 0,31 | 212 |
| | | 4,4'-Dichlordiphenylsulfon (0,1002 Mol) | 1h/250°C | | |
| | | Kaliumcarbonat (0,1056 Mol) | 3h/280°C | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 13 | | | **Verfahren A** | | |
| | 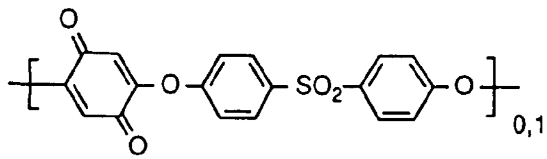 | 2,5-Dihydroxybenzochinon (0,0203 Mol) | 1h/224°C | 0,17 | 182 |
| | | 4,4'-Dihydroxydiphenylsulfon (0,1867 Mol) | 1h/254°C | | |
| | 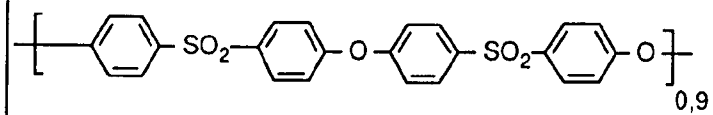 | 4,4'-Dichlordiphenylsulfon (0,2001 Mol) | 4h/281°C | | |
| | | Kaliumcarbonat (0,2103 Mol) | | | |
| PAE 14 | | | **Verfahren A** | | |
| | 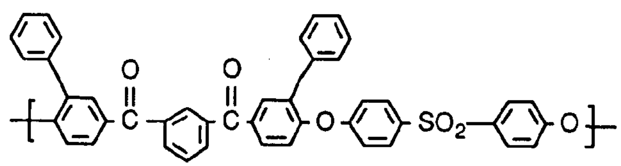 | 4,4'-Dihydroxy-3,3'-diphenyl-isophthalaphenon (0,0502 Mol) | 1h/250°C | 0,12 | 173 |
| | | 4,4'-Dihcydroxydiphenylsulfon (0,0501 Mol) | 1h/275°C | | |
| | | Kaliumcarbonat (0,0534 Mol) | 4h/300°C | | |
| | (gemäss Beispiel 1 aus EP-A-0 456 608) | | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 15 | | | **Verfahren B** | | |
| | 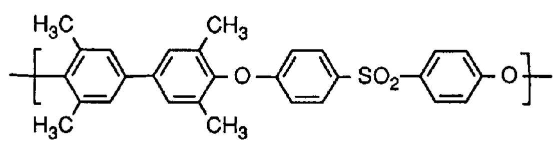 | 4,4'-Dihydroxy-3,2',5,5'-tetramethylbiphenyl (0,1008 Mol) | 1h/250°C | 0,22 | 230 |
| | | 4,4'-Dichlordiphenylsulfon (0,1001 Mol) | 1h/275°C | | |
| | | Kaliumcarbonat (0,1069 Mol) | 3h/300°C | | |
| PAE 16 | | | **Verfahren A** | | |
| | 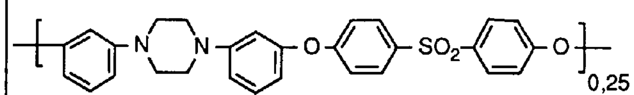 | N,N'-Bis-(3-hydroxyphenyl)-piperazin (0,0252 Mol) | 1h/250°C | 0,38 | 184 |
| | | 4,4'-Dihydroxydiphenylsulfon (0,0752 Mol) | 1h/275°C | | |
| | 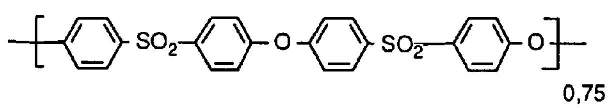 | 4,4'-Dichlordiphenylsulfon (0,1001 Mol) | 4h/280°C | | |
| | | Kaliumcarbonat (0,1053 Mol) | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 17 | | | **Verfahren A** | | |
| | 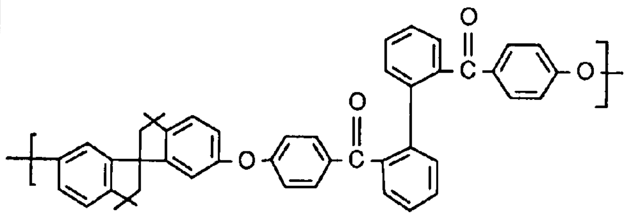 | 6,6'-Dihydroxy-3,3,3',3'-tetra-methyl-1,1'-spirobiindan (0,0501 Mol) | 1h/250°C | 0,21 | 199 |
| | | 2,2'-Bis-(4-fluorbenzoyl)-biphenyl (0,0500 Mol) | 1h/275°C | | |
| | (gemäss Beispiel 12 aus EP-A-0 451 104) | Kaliumcarbonat (0,0525 Mol) | 4h 30 min/280°C | | |
| PAE 18 | | | **Verfahren B** | | |
| | 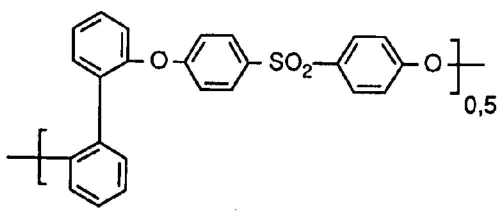 | 2,2'-Dihydroxybiphenyl (0,2005 Mol) | 1h/250°C | 0,58 | 199 |
| | | 4,4'-Dihydroxydiphenylsulfon (0,2005 Mol) | 1h/275°C | | |
| | | 4,4'-Dichlordiphenylsulfon (0,4000 Mol) | 4h/280°C | | |
| | 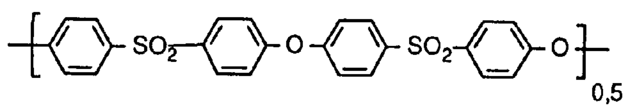 | Kaliumcarbonat (0,4200 Mol) | | | |
| | (gemäss Beispiel 12 aus EP-A-0 404 724) | | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 19 | | | **Verfahren D** | | |
| | 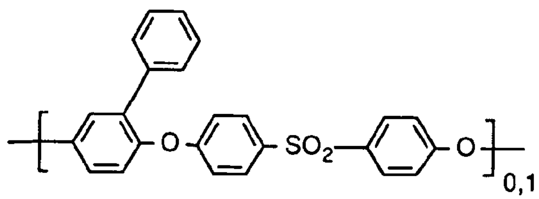 | 2,5-Dihydroxydiphenyl (0,0200 Mol) | 1h/180°C | 0,50 | 226 |
| | | 4,4'-Dihydroxydiphenylsulfon (0,1800 Mol) | 1h/200°C | | |
| | 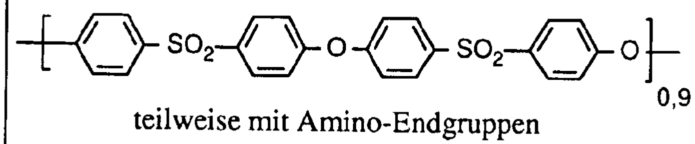 | 4,4'-Dichlordiphenylsulfon (0,2000 Mol) | 30 min/225°C | | |
| | | 3-Aminophenol (0,0030 Mol) | 30 min/250°C | | |
| | teilweise mit Amino-Endgruppen | Kaliumcarbonat (0,2100 Mol) | 3h/15 min/280°C | | |
| PAE 20 | | | **Verfahren A** | | |
| | 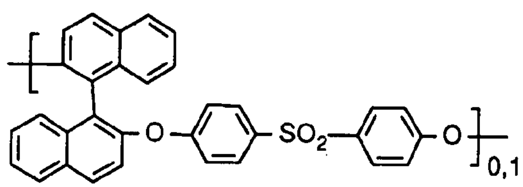 | 1,1'-Bi-2-naphthol (0,0402 Mol) | 1h/253°C | 0,33 | 219 |
| | | 4,4'-Dihydroxybiphenyl (0,0402 Mol) | 1h/277°C | | |
| | 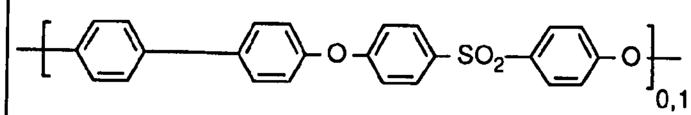 | 4,4-Dihydroxydiphenylsulfon (0,3211 Mol) | 2h/281°C | | |
| | 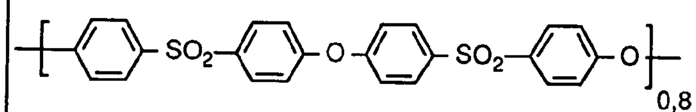 | 4,4'-Dichlordiphenylsulfon (0,4001 Mol) | | | |
| | | Kaliumcarbonat (0,4211 Mol) | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 21 | | | **Verfahren A** | | |
| | 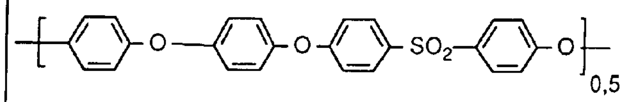 | 4,4'-Dihydroxydiphenylether (0,1004 Mol) | 1h/227°C | 0,32 | 190 |
| | | 4,4'-Dihydroxydiphenylsulfon ((0,1003 Mol) | 1h/254°C | | |
| | 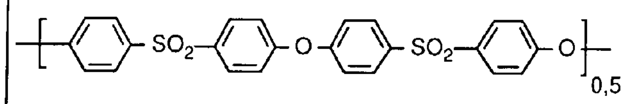 | 4,4'-Dichlordiphenylsulfon (0,2001 Mol) | 4h/282°C | | |
| | | Kaliumcarbonat (0,2100 Mol) | | | |
| PAE 22 | | | **Verfahren B** | | |
| | 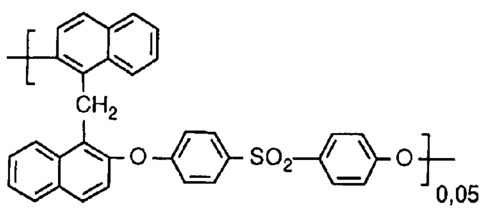 | 1,1'-Methylen-bi-2-naphthol (0,0100 Mol) | 1h/250°C | 0,22 | 199 |
| | | 4,4'-Dihydroxydiphenylsulfon (0,1908 Mol) | 1h/276°C | | |
| | | 4,4-Dihydroxydiphenylsulfon (0,2001 Mol) | 3h/280°C | | |
| | 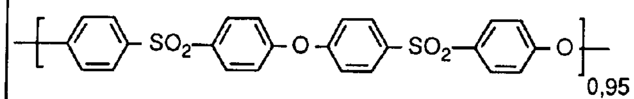 | Kaliumcarbonat (0,2100 Mol) | | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 23 | | | **Verfahren A** | | |
| | 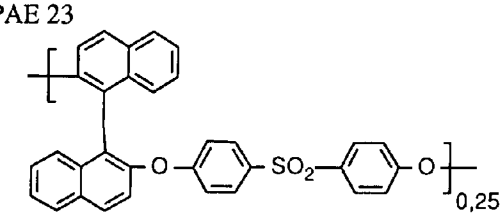 | 1,1'-Bi-2-naphthol (0,05005 Mol) | 1h/252°C | 0,66 | 238 |
| | | 4,4'-Dihydroxybiphenyl (0,05000 Mol) | 4h/281°C | | |
| | 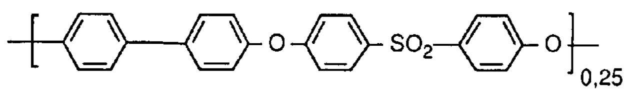 | 4,4'-Dihydroxydiphenylsulfon (0,1001 Mol) | | | |
| | | 4,4'-Dichlordiphenylsulfon (0,2000 Mol) | | | |
| | 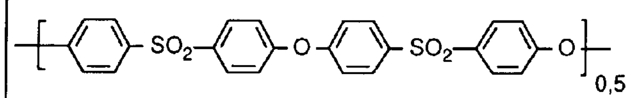 | Kaliumcarbonat (0,200 Mol) | | | |
| PAE 24 | | | **Verfahren A** | | |
| | 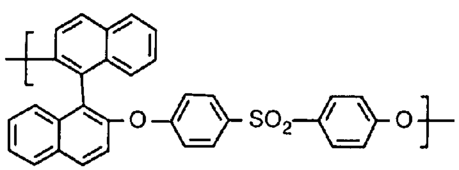 | 1,1'-Bi-2-naphthol (0,2047 Mol) | 1h/222°C | 0,30 | 243 |
| | | 4,4'-Dichlordiphenylsulfon (0,2001 Mol) | 1h/251°C | | |
| | | Kaliumcarbonat (0,2142 Mol) | 3h/274°C | | |

Tabelle: Fortsetzung

| PAE | Struktur | Synthesekomponenten | Reaktions-bedingungen | red. Visk. [dl/g] | Tg [°C] |
|---|---|---|---|---|---|
| PAE 25 | | | **Verfahren C** | | |
| | 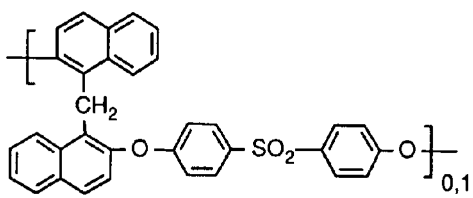 | 1,1'-Methylen-bi-2-naphthol (0,0202 Mol) | 1h/229°C | 0,33 | 214 |
| | | 4,4-Dihydroxydiphenylsulfon (0,05000 Mol) | 1h/252°C | | |
| | | 4,4'-Dichlordiphenylsulfon (0,2000 Mol) | 3h/282°C | | |
| | 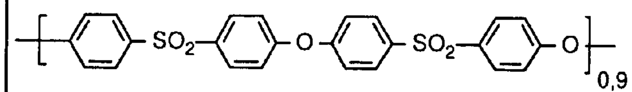 | Kaliumcarbonat (0,2202 Mol) | | | |

| | |
|---|---|
| EP I: | Tetra-(p-glycidyloxyphenyl)-ethan (ERRA® 0163 der UCC) |
| EP II: | Bisphenol A-diglycidylether (Araldit® MY 790 der CIBA-GEIGY) |
| EP III: | N,N,N',N'-Tetraglycidyl-4,4'-diaminodiphenylmethan mit einem Epoxidgehalt von 9,1 Äquivalenten/kg |
| EP IV: | N,N,N',N'-Tetraglycidyl-4,4'-diaminodiphenylmethan mit einem Epoxidgehalt von 7,5-8,5 Äquivalenten/kg |
| EP V: | N,N,O-Triglycidyl-4-aminophenon |
| EP VI: | 3,4-Epoxycyclohexylmethyl-3',4'-epoxycyclohexancarboxylat |
| EP VII: | Isomerengemisch des Bisphenol F-diglycidylethers (2,2-, 4,4- und 2,4-Derivate) |
| EP VIII: | Bisphenol-S-diglycidylether mit einem Epoxidgehalt von 5,3 Äquivalenten/kg |
| EP IX: | Phenolnovolakpolyglycidylether mit einem Epoxidgehalt von 5,6-5, 8 Äquivaltenten/kg |
| EP X: | Fester Bisphenol A-diglycidylether mit inem Epoxidgehalt von 1,68-1,75 Äquivaltenten/kg |
| EP XI: | Resorcindiglycidylether |
| EP XII: | O,O'-Diallyl-bisphenol A-diglycidylether mit einem Epoxidgehalt von 4,6 Äquivalenten/kg |
| EP XIII: | Cyclohexandimethanoldiglycidylether |
| EP XIV: | Flüssiger Bisphenol A-diglycidylether mit einem Epoxidgehalt von 5,2-5,4 Äquivalenten/kg |
| Udel®P 1800: | Polysulfon der Fa. Amoco |
| Ultem® 1000: | Polyetherimid der Fa. General Electric |
| Matrimid 5218: | Polyimid der Fa. CIBA-GEIGY AG |

Beispiele 1-8:

Die Herstellung der flexiblen Zweischichtlaminate erfolgt gemäss dem folgenden Verfahren:

Eine 25 gew.-%ige Lösung in N-Methylpyrrolidon (NMP), enthaltend das PA-PI-Blockcopolymere, den Polyarylenether (PAE) und das Epoxidharz (EP) im angegebenen Verhältnis, wird mittels einer Lackhantel (200 μm) auf die behandelte Seite einer Kupferfolie (35 μm, Hersteller. Fa. Yates) aufgetragen und im Umluft-Lacktrockenschrank unter IR-Bestrahlung getrocknet (Bedingungen: Umlufttemp.: 180°C, 45 min, IR-Lampe: Heraeus, Modell MMS 1200). Ein Teil der beschichteten Folie wird in 1 cm breite Streifen zerschnitten und das "Flex-Life" des Laminates bestimmt ("Flex-Life" = Zahl der Faltungen bis zum Bruch des Laminates, bestimmt mittels Universal-Model 2 FDF Flex Ductility-Tester mit Zuggewicht 224 g und 2 mm-Dom). An einem weiteren Folienteil der Abmessung 8 x 8 cm wird durch Eintauchen in NMP bei 20°C während 1 Stunde die Lösungsmittelstabilität bestimmt. Die Eigenschaften sind in Tabelle 1 angegeben.

Tabelle 1: Eigenschaften der flexiblen Laminaten

| Beispiel | PA-PI-Blockcopolymer | PAE | EP | Zusammensetzung (Gew.-Teile) PA-PI-Blockcopolymer | / PAE | / EP | Flex-Life (Cyclen) Ø 5 Proben | Gewichtsänderung in % nach NMP-Lagerung 1 h |
|---|---|---|---|---|---|---|---|---|
| 1 | A | 1 | EP I | 90 | 5 | 5 | 388 | + 1,7 |
| 2 | A | 1 | EP I | 85 | 10 | 5 | 402 | + 1,9 |
| 3 | A | 1 | EP I | 85 | 5 | 10 | 382 | + 5,3 |
| 4 | A | 1 | EP I | 80 | 10 | 10 | 363 | + 0,2 |
| 5 | A | 1 | EP I | 95 | 2,5 | 2,5 | 372 | + 3,5 |
| 6 | A | 1 | EP II | 80 | 10 | 10 | 368 | + 12,5 |
| 7 | B | 1 | EP I | 90 | 5 | 5 | 378 | + 8,0 |
| 8 | B | 2 | EP I | 90 | 5 | 5 | 365 | + 7,3 |

Beispiele 9-59:

Flexible Zweischichtlaminate werden nach den Verfahren der Beispiele 1-8 hergestellt unter Zusatz eines Verlaufmittels (BYK®S 706*) und bis auf Beispiel 49 während 25 Minuten bei 220°C im IR getrocknet. Im Beispiel 49 beträgt die Trocknung 180°C während 60 Minuten unter IR. Die Laminate mit einer Gesamtdicke von 60-65 µm weisen die in der Tabelle 2 angegebenen Eigenschaften auf.

Tabelle 2: Eigenschaften von flexiblen Laminaten

| Beispiel | PA-PI | PAE | EP | Zusmmensetzung (Gewichtsteile) PAPI/PAE/EP | | | Zusatz Verlaufsmittel (Gew.-%) | Flex-life (Cyclen) | Gewichtsänderung in % nach NMP-Lagerung 1h |
|---|---|---|---|---|---|---|---|---|---|
| 9 | C | 1 | I | 90 | 5 | 5 | 0,5 | 406 | + 2,0 |
| 10 | C | 1 | III | 90 | 5 | 5 | 0,5 | 385 | + 1,1 |
| 11 | C | 1 | III | 90 | 7,5 | 2,5 | 0,5 | 427 | - 1,0 |
| 12 | C | 1 | IV | 90 | 5 | 5 | 0,5 | 336 | + 0,4 |
| 13 | C | 1 | V | 90 | 5 | 5 | 0,5 | 455 | + 0,6 |
| 14 | C | 1 | VI | 90 | 5 | 5 | 0,5 | 414 | - 0,6 |
| 15 | C | 1 | I/VII | 85 | 5 | 5/5 | 0,5 | 386 | + 0,8 |
| 16 | C | 1 | I/V | 85 | 5 | 5/5 | 0,5 | 356 | + 0,6 |
| 17 | C | 3 | V | 90 | 5 | 5 | 0,5 | 373 | + 0,1 |
| 18 | C | 4 | V | 90 | 5 | 5 | 0,5 | 361 | + 0,5 |
| 19 | C | 5 | V | 90 | 5 | 5 | 0,5 | 373 | + 4,0 |
| 20 | C | 6 | V | 90 | 5 | 5 | 0,5 | 402 | + 1,2 |
| 21 | C | 7 | V | 90 | 5 | 5 | 0,5 | 374 | + 0,8 |
| 22 | C | 8 | V | 90 | 5 | 5 | 0,5 | 453 | + 2,1 |

Tabelle 2: Eigenschaften von flexiblen Laminaten

| Beispiel | PA-PI | PAE | EP | Zusmmensetzung (Gewichtsteile) PAPI/PAE/EP | | | Zusatz Verlaufsmittel (Gew.-%) | Flex-life (Cyclen) | Gewichtsänderung in % nach NMP-Lagerung 1h |
|---|---|---|---|---|---|---|---|---|---|
| 23 | C | 9 | V | 90 | 5 | 5 | 0,5 | 397 | + 2,4 |
| 24 | C | 10 | V | 90 | 5 | 5 | 0,5 | | 362 + 1,6 |
| 25 | C | 11 | V | 90 | 5 | 5 | 0,5 | 377 | + 1,3 |
| 26 | C | 12 | V | 90 | 5 | 5 | 0,5 | 408 | + 2,1 |
| 27 | C | 13 | V | 90 | 5 | 5 | 0,5 | 441 | + 2,1 |
| 28 | C | 14 | V | 90 | 5 | 5 | 0,5 | 410 | + 0,6 |
| 29 | C | 15 | V | 85 | 5 | 5 | 0,5 | 385 | + 1,4 |
| 30 | C | 16 | V | 85 | 5 | 5 | 0,5 | 412 | + 0,7 |
| 31 | C | 17 | V | 90 | 5 | 5 | 0,5 | 410 | + 0,5 |
| 32 | C | 18 | V | 90 | 5 | 5 | 0,5 | 397 | + 0,4 |
| 33 | C | 19 | V | 90 | 5 | 5 | 0,5 | 440 | + 0,9 |
| 34 | C | 20 | V | 90 | 5 | 5 | 0,5 | 341 | + 0,7 |
| 35 | C | 21 | V | 90 | 5 | 5 | 0,5 | 416 | + 0,4 |
| 36 | C | 8 | VIII | 90 | 5 | 5 | 0,5 | 423 | + 0,1 |

Tabelle 2: Eigenschaften von flexiblen Laminaten

| Beispiel | PA-PI | PAE | EP | Zusmmensetzung (Gewichtsteile) PAPI/PAE/EP | | | Zusatz Verlaufsmittel (Gew.-%) | Flex-life (Cyclen) | Gewichtsänderung in % nach NMP-Lagerung 1h |
|---|---|---|---|---|---|---|---|---|---|
| 37 | C | 22 | V | 90 | 5 | 5 | 0,25 | 412 | + 1,2 |
| 38 | C | 23 | V | 90 | 5 | 5 | 0,25 | 397 | + 1,1 |
| 39 | C | 24 | V | 90 | 5 | 5 | 0,25 | 431 | + 0,7 |
| 40 | C | 1 | V | 90 | 5 | 5 | 0,25 | 394 | + 1,0 |
| 41 | C | 1 | IX | 90 | 5 | 5 | 0,25 | 406 | + 1,0 |
| 42 | C | 1 | X | 90 | 5 | 5 | 0,25 | 351 | + 0,9 |
| 43 | C | 1 | XI | 85 | 5 | 5 | 0,25 | 441 | + 1,5 |
| 44 | C | 1 | VIII | 85 | 5 | 5 | 0,25 | 373 | + 0,6 |
| 45 | C | 1 | XII | 90 | 5 | 5 | 0,25 | 387 | + 1,1 |
| 46 | C | 1 | XII | 85 | 5 | 10 | 0,25 | 403 | + 0,9 |
| 47 | C | 1 | XII | 85 | 10 | 5 | 0,25 | 427 | + 0,6 |
| 48 | D | 1 | V | 90 | 5 | 5 | 0,25 | 362 | + 0,7 |
| 49 | D | 1 | V | 90 | 5 | 5 | 0,25 | 379 | + 0,8 |

Tabelle 2: Eigenschaften von flexiblen Laminaten

| Bei-spiel | PA-PI | PAE | EP | Zusmmensetzung (Gewichtsteile) PAPI/PAE/EP | Zusatz Verlaufsmittel (Gew.-%) | Flex-life (Cyclen) | Gewichtsänderung in % nach NMP-Lagerung 1h |
|---|---|---|---|---|---|---|---|
| 50 | E | 1 | V | 90 5 5 | 0,25 | 424 | + 0,3 |
| 51 | A | 1 | VI | 90 5 5 | 0,25 | 423 | + 10,6 |
| 52 | A | 1 | XIV | 87,5 5 7,5 | 0,25 | 425 | + 4,0 |
| 53 | C | 1 | XIII | 90 5 5 | 0,25 | 431 | + 0,1 |
| 54 | A/C | 1 | VI | 45 / 45 / 5 / 5 | 0,25 | 364 | - 0,1 |
| 55 | C | 1 | V | 90 5 5 | 0,25 | 467 | + 1,0 |
| (Beschichtung 22,5 %* in Dimethylacetamid, Laminatdicke; 52 µm | | | | | | | |
| 56 | A | 1 | V | 90 5 5 | 0,25 | 345 | + 2,2 |
| (Beschichtung 25 % in Dimethylsulfoxid) | | | | | | | |
| 57 | C | 1/Udel | V | 90 / 2,5 / 2,5 / 5 | 0,25 | 400 | + 2,2 |
| (Beschichtung unter Zusatz von Ude l® P1800) | | | | | | | |
| 58 | C | 1/Ultem | V | 85 / 5 / 5 / 5 | 0,25 | 407 | + 0,1 |
| (Beschichtung unter Zusatz von Ultem®1000) | | | | | | | |
| 59 | C | 1/Matr. | V | 85 / 5 / 5 / 5 | 0,25 | 465 | + 0,8 |
| (Beschichtung unter Zusatz von Matrimid 5218) | | | | | | | |

* Die %-Angabe bezieht sich auf die gesamte Polymerkonzentration

Beispiel 60:

PA-PI-Blockcopolymer A, Polyarylenether 1 und Epoxid I werden mit einer Konzentration von 20 Gew.-% im Verhältnis 90:5:5 Gew.-Teile in N-Methylpyrrolidon gelöst und mit einer Schichtdicke von 200 µm auf eine Kupferfolie (Stärke 35 µm, NT-TW der Fa. Circuit-Foils) aufgetragen und anschliessend 10 Minuten bei 50°C, 45 Minuten bei 150°C und 45 Minuten bei 270°C im Umlufttrockenschrank getrocknet und die Haftung bei verschiedenen Temperaturen bestimmt:

| | |
|---|---|
| Raumtemperatur: | 19,7 N/cm |
| 150°C: | 18,5 N/cm |
| 260°C: | 5,2 N/cm |

**Patentansprüche**

1. Gemische enthaltend, bezogen auf 100 Gewichtsteile des Gemisches,
   (a) 50 bis 98 Gew.-Teile eines Polyamid-Polyimid(PA-PI)-Blockcopolymeren,
   (b) 1 bis 49 Gew.-Teile eines Polyarylenethers mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 100 Mol-% eines wiederkehrenden Strukturelementes der Formel Ia
   $$\{O - Ar_1 - O - Ar_2\} \quad (Ia)$$
   und 0 bis 95 Mol-% eines wiederkehrenden Strukturelementes der Formel Ib
   $$\{O - Ar_3 - O - Ar_2\} \quad (Ib)$$
   enthält, worin $Ar_1$ einen unsubstituierten oder durch ein oder mehrere $C_1$-$C_4$-Alkyle, $C_1$-$C_4$-Alkoxy oder Halogenatome subsbtuierten carbocyclisch-organischen Rest, $Ar_2$ einen unsubstituierten oder durch ein oder mehrere $C_1$-$C_4$-Alkyle oder $C_1$-$C_4$-Alkoxy substituierten, ein oder mehrere -CO-, $-SO_2-$ oder -SO- als Brückenglieder enthaltenden carbocyclisch-aromatischen Rest, Cyanphenylen, pyridin- oder Pyrazin-Rest und $Ar_3$ einen von $Ar_1$ verschiedenen unsubstituierten oder durch ein oder mehrere $C_1$-$C_4$-Alkyle, $C_1$-$C_4$-Alkoxy oder Halogenatome subsbtuierten carbocyclisch-aromatischen Rest bedeuten, und
   (c) 1 bis 40 Gew.-Teile eines Epoxidharzes mit mindestens zwei Glycidylgruppen im Molekül und
   (d) 0 bis 10 Gew.-Teile eines weiteren Polymeren aus der Gruppe der Polyamide, Polyimide, Polyetherimide, Polyesterimide, Polyhydantoin oder Polyparabansäuren.

2. Gemische gemäss Anspruch 1 enthaltend, bezogen auf 100 Gewichtsteile des Gemisches,
   (a) 50 bis 98 Gew.-Teile eines Polyamid-Polyimid(PA-PI)-Blockcopolymeren,
   (b) 1 bis 49 Gew.-Teile eines Polyarylenethers mit einer reduzierten Viskosität von 0,1 bis 2,0 dl/g, gemessen an einer Lösung von 1 g Polymeren in 100 ml N-Methyl-2-pyrrolidon (NMP) bei 25°C, der, bezogen auf die Gesamtmenge der im Polyetherharz vorhandenen Strukturelemente, 5 bis 100 Mol-% eines wiederkehrenden Strukturelementes der Formel Ia
   $$\{O - Ar_1 - O - Ar_2\} \quad (Ib)$$
   und 0 bis 95 Mol-% eines wiederkehrenden Strukturelementes der Formel Ib
   $$\{O - Ar_3 - O - Ar_2\}$$
   enthält, worin $Ar_1$ einen unsubstituierten oder durch ein oder mehrere $C_1$-$C_4$-Alkyle, $C_1$-$C_4$-Alkoxy oder Halogenatome subsbtuierten carbocyclisch-organischen Rest, $Ar_2$ einen unsubstituierten oder durch ein oder mehrere $C_1$-$C_4$-Alkyle oder $C_1$-$C_4$-Alkoxy substituierten, ein oder mehrere -CO-, $-SO_2-$ oder -SO- als Brückenglieder enthaltenden carbocyclisch-aromatischen Rest oder Cyanphenylen und $Ar_3$ einen von $Ar_1$ verschiedenen unsubstituierten oder durch ein oder mehrere $C_1$-$C_4$-Alkyle, $C_1$-$C_4$-Alkoxy oder Halogenatome substituierten carbocyclisch-aromatischen Rest bedeuten, und
   (c) 1 bis 40 Gew.-Teile eines Epoxidharzes mit mindestens zwei Glycidylgruppen im Molekül.

3. Gemische gemäss Anspruch 1, enthaltend ein PA-PI-Blockcopolymer (a) mit einem mittleren Molekulargewicht $\overline{M}_n$ von 1'000 bis 50'000, das wiederkehrende Einheiten der Formel II
   $$\{PA\text{-}PI\} \quad (II),$$
   worin PA für einen Polyamidblock mit einem mittleren Molekulargewicht $\overline{M}_n$ von 300-20'000 steht, enthaltend mindestens eine (wiederkehrende) Einheit der Formel III

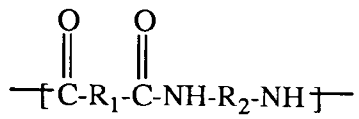 (III),

worin $R_1$ ein Rest der Formeln $-C_nH_{2n}-$,

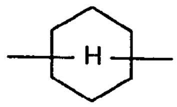 , 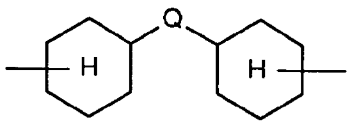 ,

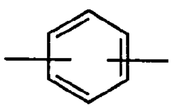 , 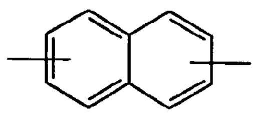 oder 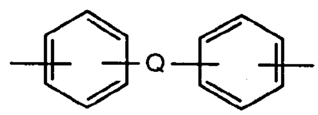

ist, und $R_2$ einen Rest der Formeln $-C_nH_{2n}-$,

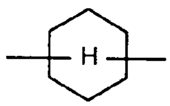 , 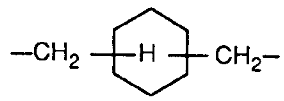 ,

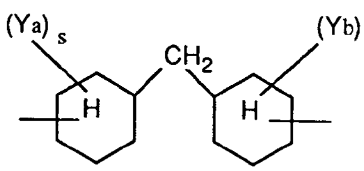 , 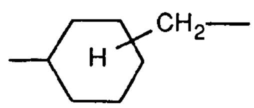 , 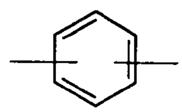 ,

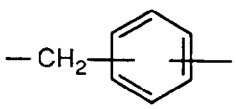 , 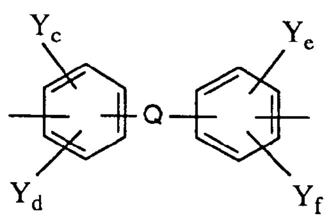 , 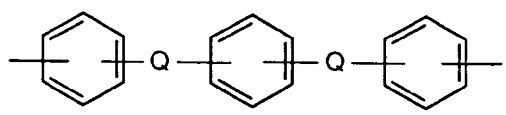

oder

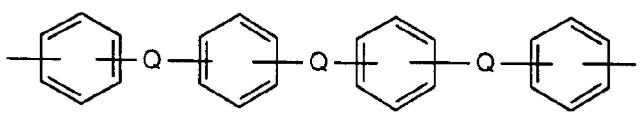

bedeutet, worin Q die direkte Bindung, $-CH_2-$, $-CH_2CH_2-$, $-CH(CH_3)-$, $-C(CH_3)_2-$, $-C(CF_3)-$, -O-, -S-, $-SO_2-$, oder -CO-,

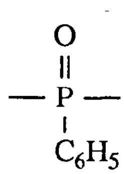

ist, und n 2-12 ist, Ya und Yb unabhängig voneinander je ein $C_1$-$C_4$-Alkyl bedeuten, wobei s für Null oder eine Zahl von 1 bis 4 steht, und $Y_c$, $Y_d$, $Y_e$ und $Y_f$ unabhängig voneinander Wasserstoff, Halogen oder $C_1$-$C_4$-Alkyl bedeuten, und PI für einen Polyimidblock mit einem mittleren Molekulargewicht $\overline{M}_n$ von 300-20'000 steht, enthaltend mindestens eine (wiederkehrende) Einheit der Formel IV

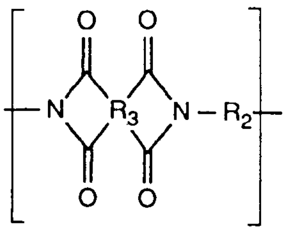

(IV),

worin

$R_3$ 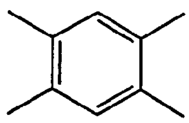 , 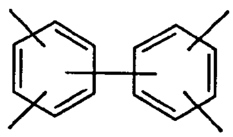 , 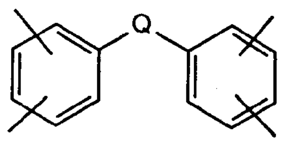 , 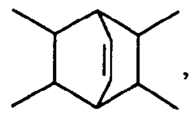 ,

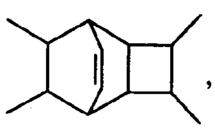 , 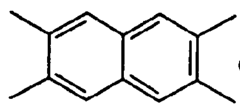 oder 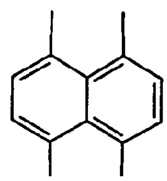

ist, und Q und $R_2$ die oben angegebene Bedeutung haben, mit der Massgabe, dass 25-100 Mol-% aller Brückenglieder

$R_2$ 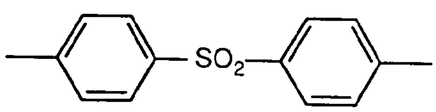 und/oder 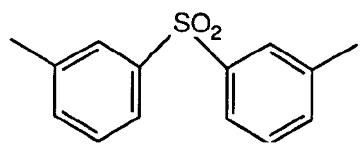

bedeuten, und der (cyclo-)aliphatische Anteil an Brückengliedern $R_2$ nicht mehr als 10 Mol-% beträgt.

**4.** Gemische gemäss Anspruch 1, enthaltend ein PA-PI-Blockcopolymer (b) mit einem $\overline{M}_n$ von 1'000 bis 50'000 und wiederkehrenden Struktureinheiten der Formel II

$\{$PA-PI$\}$ (II),

worin im Polyamidblock PA und im Polyimidblock PI ein Verhältnis von Amid- zu Imidgruppen von etwa 4:1 bis 1:4 vorliegt und das Blockcopolymer in den Polyimidblöcken einen Gehalt von mindestens 2 Mol. %, bezogen auf den Gehalt an allen Carbonsäureresten im Blockcopolymer, an Resten der Formel

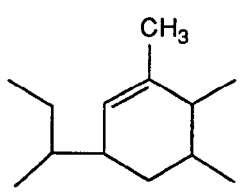

;

aufweist.

**5.** Gemische gemäss Anspruch 4, enthaltend ein PA-PI-Blockcopolymer aus Kombinationen von Blöcken der Formeln Vb mit IVa und/oder IVc oder der Formeln IVb mit Va und/oder Vc

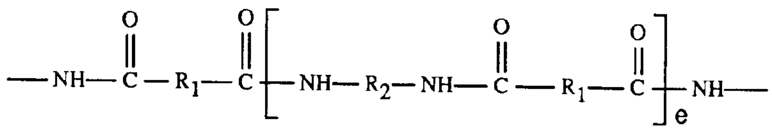
(IVa),

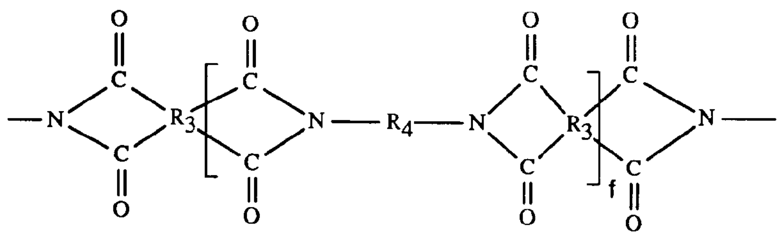
(IVb),

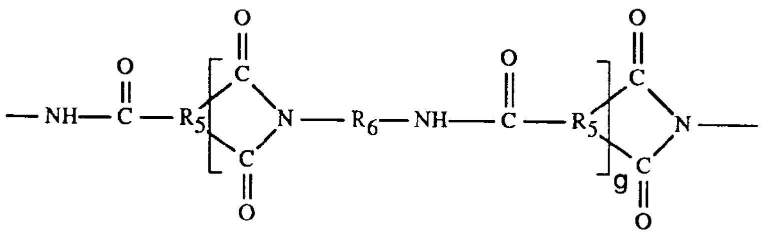
(IVc),

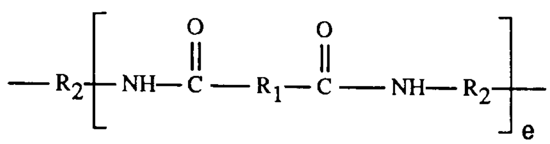
(Va),

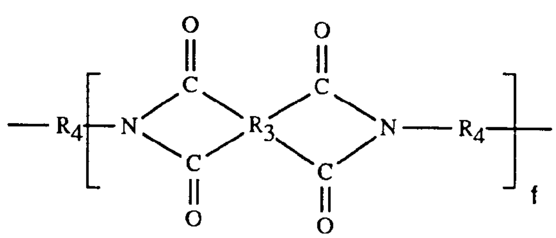
(Vb),

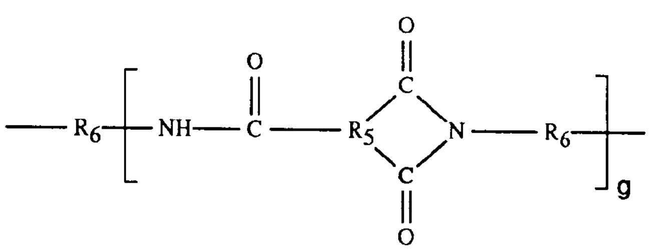
(Vc),

worin die Indizes e, f und g unabhängig voneinander ganze Zahlen von 1 bis 100 sind, $R_1$ ein Rest der Formeln $-C_nH_{2n}-$,

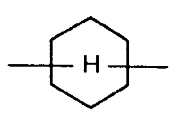 , 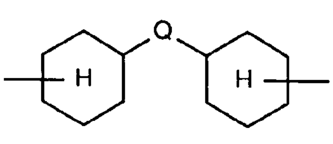 ,

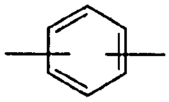, 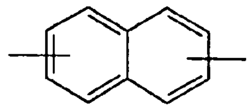 oder 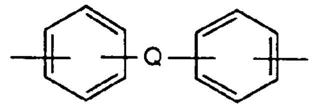

ist, und $R_2$ einen Rest der Formeln $-C_nH_{2n}-$,

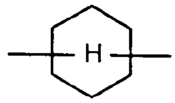, 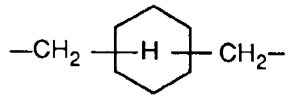,

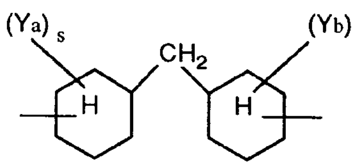, 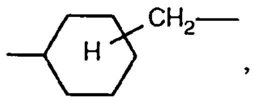, 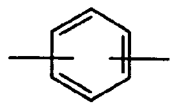, 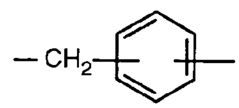,

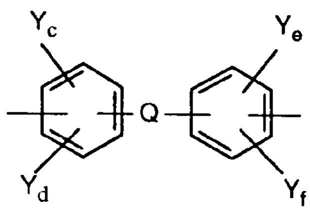, 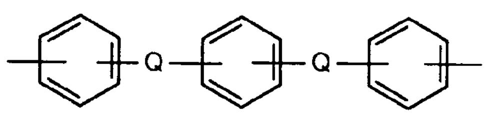

oder

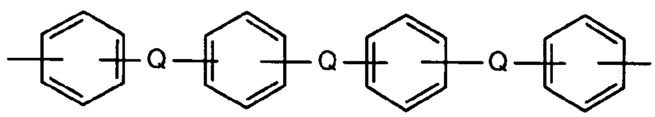

bedeutet, worin Q die direkte Bindung, $-CH_2-$, $-CH_2CH_2-$, $-CH(CH_3)-$, $-C(CH_3)_2-$, $C(CF_3)-$, -O-, $-SO_2-$, oder -CO-,

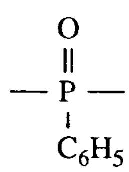

ist, und n 2-12 ist Ya und Yb unabhängig voneinander je ein $C_1$-$C_4$-Alkyl bedeuten, wobei s für Null oder eine Zahl von 1 bis 4 steht, und $Y_c$, $Y_d$, $Y_e$ und $Y_f$ unabhänbig voneinander Wasserstoff, Halogen oder $C_1$-$C_4$-Alkyl bedeuten, $R_3$ ein Rest der Formeln

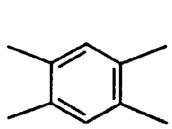, 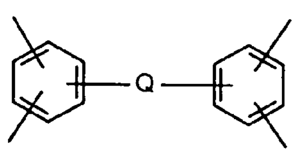, 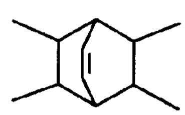, 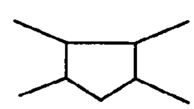,

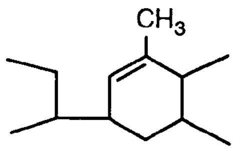, 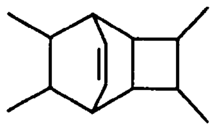, 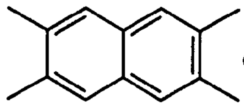 oder 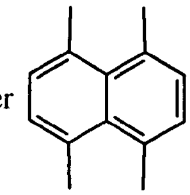

ist,
worin Q die gleiche Bedeutung wie oben hat, $R_5$ ein Rest der Formel

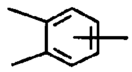

ist, und $R_4$ und $R_5$ unabhänbig voneinander eine der für $R_2$ definierten Bedeutungen besitzen, mit der Massgabe, dass 25-100 Mol % aller Reste $R_3$ die Formel

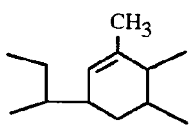

aufweisen.

6. Gemische gemäss Anspruch 5, enthaltend ein PA-PI-Blockcopolymer aus kombinationen von Blöcken der Formeln IVa mit Vb und/oder Vc oder der Formeln IVb mit Va und/oder Vc oder der Formeln IVc mit Va und/oder Vb, mit der anderen Massgabe, dass 10-100 Mol %, bevorzugt 25-100 Mol %, insbesondere 50-100 Mol %, aller Reste $R_2$, $R_4$ und $R_5$, bezogen auf die Gesamtmenge dieser Reste, die Formel

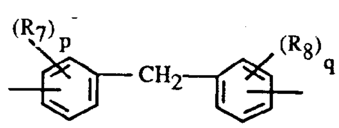

aufweisen, worin p 1 oder 2 und q Null, 1 oder 2 sind, $R_7$ und $R_5$ je ein $C_1$-$C_8$-Alkyl bedeuten oder worin je zwei zueinander ortho-ständige Reste $R_7$ und $R_8$ jeweils zusammen eine Alkylengruppe mit 2 bis 10 C-Atomen bilden.

7. Gemische gemäss Anspruch 5, enthaltend ein PA-PI-Blockcopolymer aus Kombinationen von Blöcken der Formeln IVa mit Vb und/oder Vc oder der Formeln IVb mit Va und/oder Vc oder der Formeln IVc mit Va und/oder Vb, mit der anderen Massgabe, dass 25-100 Mol % aller Reste $R_2$, $R_4$ und $R_6$, bezogen auf die Gesamtmenge dieser Reste die Formel

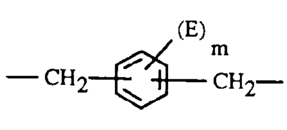 und/oder 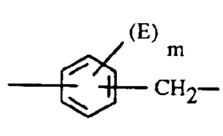

aufweisen, worin E ein $C_1$-$C_8$-Alkyl oder Halogen bedeutet und m für eine Zahl von 0 bis 4 steht.

8. Gemische gemäss Anspruch 1, enthaltend einen Polyarylenether (b), worin $Ar_1$ im wiederkehrenden Strukturelement der Formel Ia einen Rest der Formeln

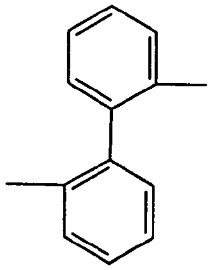 , 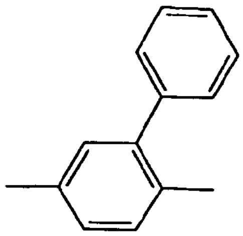 , 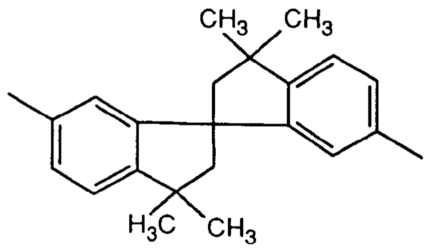 ,

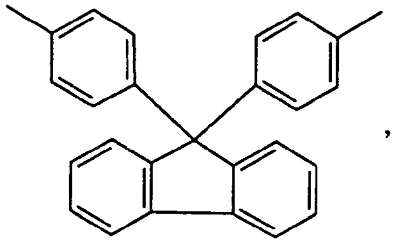 , 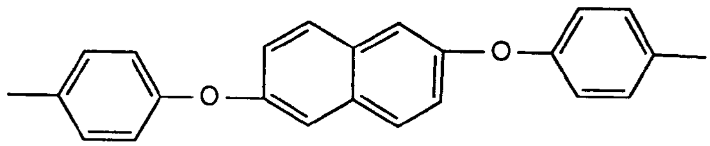

oder

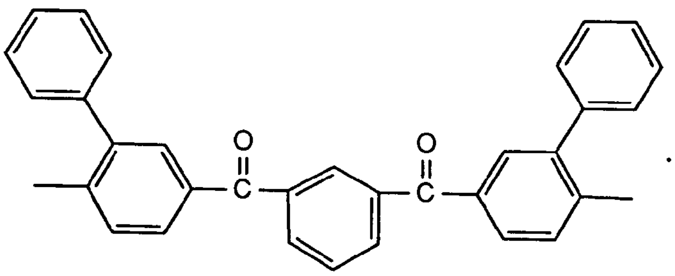 .

**9.** Gemische gemäss Anspruch 1, enthaltend einen Polyarylenether (b), worin $Ar_2$ im wiederkehrenden Strukturelement der Formeln Ia und Ib einen Rest der Formeln

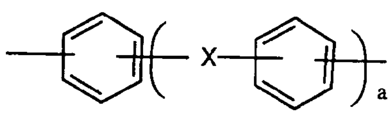 , 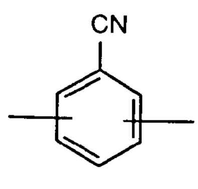 , 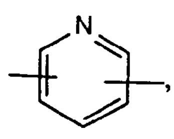 , 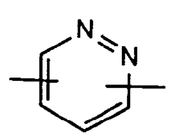

oder

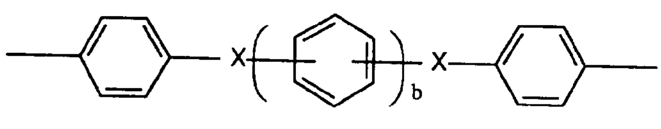

bedeutet,
worin a für 1, 2 oder 3, b für 2 oder 3 und X für -SO-, $-SO_2-$ oder -CO- stehen.

**10.** Gemische gemäss Anspruch 1, enthaltend einen Polyarylenether (b), worin $Ar_2$ im wiederkehrenden Strukturelement der Formeln Ia und Ib einen Rest der Formeln

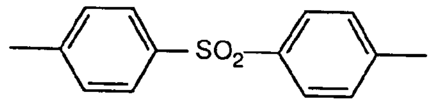

oder

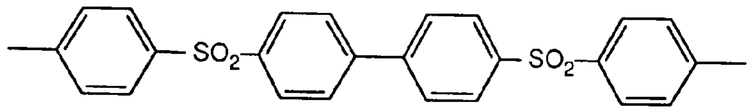

bedeutet.

**11.** Gemische gemäss Anspruch 1, enthaltend einen Polyarylenether (b), worin $Ar_3$ im wiederkehrenden Strukturelement der Formel Ib einen Rest der Formeln

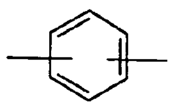 , 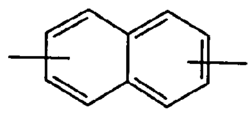 , 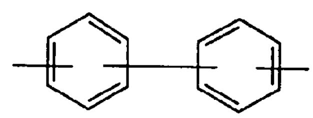

oder

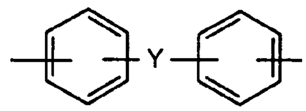

bedeutet,

worin Y für $-CH_2-$, $-C(CH_3)_2-$, $-C(CH_3)(C_6H_5)-$, $-C(CF_3)_2$, -S-, $-SO_2-$, -O- oder -CO- steht.

**12.** Gemische gemäss Anspruch 1, enthaltend einen Polyarylenether (b), worin $Ar_3$ im wiederkehrenden Strukturelement der Formel Ib einen Rest der Formeln

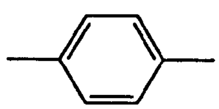 , 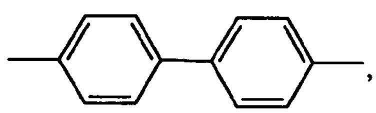 , 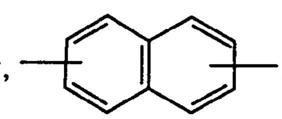 ,

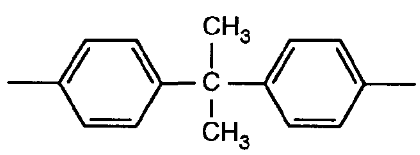 , 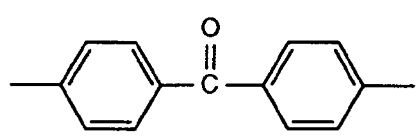 ,

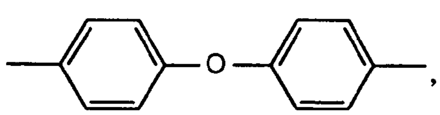 , 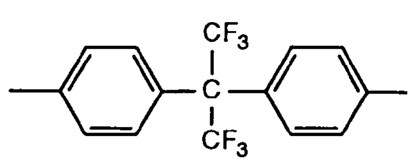

oder

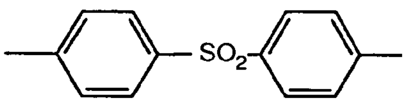

bedeutet.

**13.** Gemische gemäss Anspruch 1, enthaltend als Epoxidharz (c) Bisphenol A-, Bisphenol F-, Bisphenol S-diglycidylether, Resorcindiglycidylether, Cyclohexandimethanoldiglycidylether, N,N,O-Triglycidyl-p-aminophenol, N,N,O-Triglycidyl-m-aminophenol, Triglycidylisocyanurat, Tetraglycidyl-4,4'-diaminodiphenylmethan oder Tetra- (-p-glycidyloxyphenyl)-ethan.

**14.** Gemische gemäss Anspruch 13, enthaltend als Epoxidharz (c) Bisphenol A-diglycidylether, Tetraglycidyl-4,4'-diaminodiphenylmethan, Tetra-(-p-glycidyloxyphenyl)-ethan oder N,N,O-Triglycidyl-m-aminophenol.

**15.** Gemische gemäss Anspruch 1, enthaltend als weiteres Polymer (d) ein Polyetherimid oder ein Polyimid.

**16.** Einfach beschichtete Laminate, vorzugsweise Metallaminate und insbesondere Kupferlaminat, enthaltend als Beschichtung ein Gemisch gemäss Anspruch 1.

**17.** Laminate, vorzugsweise Metallaminate und insbesondere Kupferlaminate, in denen die Verklebung aus einem Gemisch gemäss Anspruch 1 besteht.

**18.** Lösung enthaltend 1 bis 50 Gewichtsteile, vorzugsweise 5 bis 40 Gewichtsteile, eines Gemisches gemäss Anspruch 1, gelöst in 100 ml eines organischen Lösungsmittels, vorzugsweise N-Methylpyrrolidon oder γ-Butyrolacton.

**19.** Polyarylenether (b) gemäss Anspruch 1 mit einer reduzierten Viskosität von 0, 1 bis 2,0 dl/g, gemessen an einer Lösung von 1 g Polymeren in 100 ml N-Methyl-2-pyrrolidon bei 25°C, die, bezogen auf die Gesamtmenge der im Polyetherharz vorhandenen Strukturelemente, 5 bis 100 Mol-% eines wiederkehrenden Strukturelementes der Formel Ic

$$\left[ O - Ar_1' - O - Ar_2 \right] \qquad (Ic)$$

und 0 bis 95 Mol-% eines wiederkehrenden Strukturelementes der Formel Ib

$$\left[ O - Ar_3 - O - Ar_2 \right] \qquad (Ib)$$

enthält, worin $Ar_1'$ einen Rest der Formel

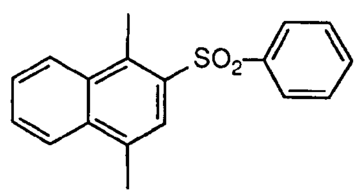 , 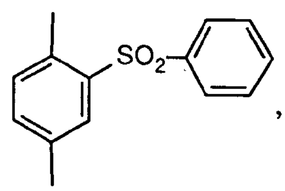 , 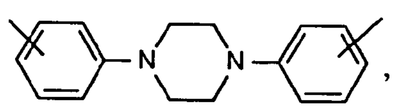 ,

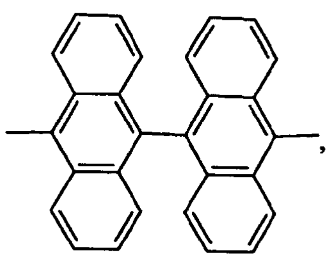 , 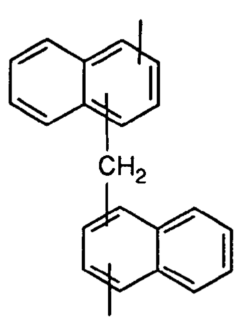 , 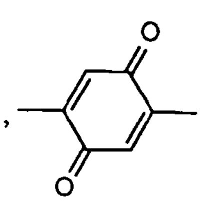 oder 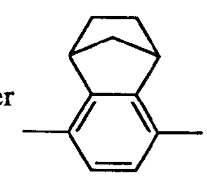

bedeuten,

$Ar_2$ einen unsubsbtuierten oder durch ein oder mehrere $C_1$-$C_4$-Alkyle oder $C_1$-$C_4$-Alkoxy substituierten, ein oder mehrere -CO-, $-SO_2-$ oder -SO- als Brückenglieder enthaltenden carbocyclisch-aromatischen Rest,

Cyanphenylen, Pyridin- oder Pyrazin-Rest und $Ar_3$ einen von $Ar_1$ verschiedenen unsubstituierten oder durch ein oder mehrere $C_1$-$C_4$-Alkyle, $C_1$-$C_4$-Alkoxy oder Halogenatome subsbtuierten carbocyclischen Rest bedeuten.